# EUROPEAN PATENT APPLICATION

(11) **EP 4 608 047 A1**
(43) Date of publication of application: **27.08.2025**
(21) Application number: 23885049.9
(22) Date of filing: 02.11.2023
(51) Int. Cl.: H04W 74/08

(54) **COMMUNICATION METHOD, APPARATUS AND SYSTEM**

(30) Priority: 03.11.2022 CN 202211372742
(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN); WU, Hao, Shenzhen, Guangdong 518129 (CN)
(74) Representative: Goddar, Heinz J.
(86) International application number: PCT/CN2023/129341
(87) International publication number: WO 2024/094123

(57) **Abstract**

This application provides a communication method, apparatus, and system, and is applied to the field of communication technologies. The communication method provided in this application includes: obtaining first channel occupancy time; determining that first transmission succeeds on a first transmission resource within the first channel occupancy time, where the first transmission is used to send a first transport block to a receiving terminal device; determining that a second transmission resource of the first transport block exists within the first channel occupancy time; and performing second transmission by using the second transmission resource. Based on the communication method provided in embodiments of this application, when determining that a particular transmission of the first transport block succeeds within the first channel occupancy time, the sending terminal device can continue to use a subsequent transmission resource of the first transport block to perform transmission, thereby avoiding a case in which transmission of another transport block within the first channel occupancy time is affected because the sending terminal device subsequently no longer transmits the first transport block.

## Description

This application claims priority to Chinese Patent Application No. 202211372742.8, filed with the China National Intellectual Property Administration on November 3, 2022 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

Currently, in a scenario in which a terminal device communicates with a network device, used spectrum resources are classified into a licensed spectrum and an unlicensed spectrum. The unlicensed spectrum is also referred to as a shared spectrum. To fairly use the unlicensed spectrum, the terminal device needs to perform a listen before talk (listen before talk, LBT) process (or referred to as a channel access process) before sending data.

After the terminal device successfully performs LBT on a particular channel, the terminal device may preempt the channel, to obtain corresponding channel occupancy time (channel occupancy time, COT) including a plurality of consecutive slots. According to a current stipulation, when the terminal device uses the COT, if the terminal device transmits data for a plurality of times, an interval between two consecutive data transmissions needs to not exceed a preset threshold. If an interval between two consecutive data transmissions does not exceed a preset threshold, the terminal device needs to successfully perform LBT again before transmitting data next time.

Currently, when a segment of COT is used for transmission of a plurality of transport blocks (transport block, TB), each TB may have a corresponding new transmission resource and a corresponding retransmission resource in the COT. In a scenario in which mode 2 (mode 2) is used for sidelink (sidelink, SL) communication, for a particular TB, if the terminal device considers that new transmission or retransmission of the TB succeeds, the terminal device does not use a subsequent retransmission resource of the TB to perform retransmission of the TB. However, if the SL communication is combined with the unlicensed spectrum, in this scenario, if there is a transmission resource of another TB subsequently in the COT, because some intermediate resources are not used by the terminal device (to be specific, the terminal device does not use the subsequent retransmission resource of the TB to perform retransmission of the TB), the terminal device needs to perform an LBT process again before using the transmission resource of the another TB subsequently in the COT. In other words, the terminal device cannot directly use the transmission resource of the another TB subsequently in the COT. Consequently, communication efficiency and communication quality are reduced.

### SUMMARY

Embodiments of this application provide a communication method, apparatus, and system, to resolve a problem that transmission of another transport block in channel occupancy time is affected because a terminal device does not use a retransmission resource of a particular TB in the channel occupancy time in an unlicensed spectrum.

To achieve the foregoing objectives, the following technical solutions are used in embodiments of this application.

According to a first aspect, a communication method is provided. The method may be performed by a sending terminal device, may be performed by a component (such as a processor, a chip, or a chip system) of the sending terminal device, or may be implemented by a logical module or software that can implement all or some functions of the sending terminal device. The following uses an example in which the sending terminal device performs the method for description. The method includes: The sending terminal device obtains first channel occupancy time, where the first channel occupancy time includes transmission resources in a plurality of consecutive time units. If the sending terminal device determines that a first transmission resource is within the first channel occupancy time, the sending terminal device selects a target logical channel from candidate logical channels, where the target logical channel is a logical channel that is hybrid automatic repeat request HARQ disabled, and selection of the target logical channel is irrelevant to a HARQ attribute of a candidate logical channel with a highest priority in the candidate logical channels. Afterwards, the sending terminal device generates a first transport block based on the target logical channel, and sends first indication information to a receiving terminal device corresponding to the first transport block, where the first indication information indicates that the first transport block is HARQ feedback disabled, and the first indication information corresponds to transmission of the first transport block on the first transmission resource.

In a current SL LCP process, when a PSFCH is configured for the first transmission resource, the terminal device needs to select, based on the HARQ attribute of the candidate logical channel with the highest priority, a candidate logical channel whose HARQ attribute is the same as the HARQ attribute of the candidate logical channel with the highest priority. Therefore, if the candidate logical channel with the highest priority is HARQ feedback enabled, logical channels that are selected by the terminal device for the first transmission resource and on which transmission is allowed are all HARQ feedback enabled. However, based on the communication method provided in this embodiment of this application, if determining that the first transmission resource is within the first channel occupancy time, the sending terminal device selects the target logical channel that is HARQ feedback disabled, to ensure that a logical channel used for transmission on the first transmission resource is HARQ feedback disabled, and the first indication information corresponding to transmission on the first transmission resource also indicates that the first transport block is HARQ feedback disabled. It may be understood that the receiving terminal device does not send, to the sending terminal device under an indication of the first indication information, HARQ feedback corresponding to transmission on the first transmission resource. Therefore, based on a current HARQ feedback mechanism, when not receiving an ACK corresponding to transmission on the first transmission resource, the sending terminal device does not consider that transmission performed on the first transmission resource succeeds (or in other words, does not consider that transmission performed on the first transmission resource is the last transmission of the first transport block). In this case, if another transmission resource following the first transmission resource further exists within the first channel occupancy time, the sending terminal device continues to transmit the first transport block on the another transmission resource, to avoid a case in which transmission of another transport block within the first channel occupancy time is affected because the sending terminal device subsequently no longer transmits the first transport block, thereby improving channel access efficiency and communication quality of an SL communication system.

With reference to the first aspect, in a possible design, that the sending terminal device obtains first channel occupancy time includes: The sending terminal device receives second indication information from a network device or another terminal device, where the second indication information indicates the first channel occupancy time; or obtaining the first channel occupancy time through a listen before talk LBT process. Based on this solution, several implementations of obtaining the first channel occupancy time are provided.

According to a second aspect, a communication method is provided. The method may be performed by a sending terminal device, may be performed by a component (such as a processor, a chip, or a chip system) of the sending terminal device, or may be implemented by a logical module or software that can implement all or some functions of the sending terminal device. The following uses an example in which the sending terminal device performs the method for description. The method includes: The sending terminal device obtains first channel occupancy time, where the first channel occupancy time includes transmission resources in a plurality of consecutive time units. When a HARQ feedback attribute used during packet assembly of a first transport block is HARQ feedback enabled, the sending terminal device sends one or more pieces of first indication information to a receiving terminal device corresponding to the first transport block, where each of the one or more pieces of first indication information corresponds to one transmission of the first transport block within the first channel occupancy time, and the first indication information indicates that the first transport block is HARQ feedback disabled.

Different from a current solution in which a corresponding HARQ feedback attribute indicating a transport block is sent based on a HARQ feedback attribute used during packet assembly of the transport block, in this solution, even if the HARQ feedback attribute used during packet assembly of the first transport block is HARQ feedback enabled, the sending terminal device still sends, to the receiving terminal device, indication information indicating that the HARQ feedback attribute of the first transport block is HARQ feedback disabled, to ensure that the receiving terminal device does not send, to the sending terminal device under the indication of the first indication information, HARQ feedback corresponding to transmission of the first transport block within the first channel occupancy time, so that a case in which transmission of another transport block within the first channel occupancy time is affected because the sending terminal device determines, based on the received HARQ feedback, that a particular transmission of the first transport block succeeds within the first channel occupancy time, and consequently subsequently no longer transmits the first transport block is avoided, thereby improving channel access efficiency and communication quality of an SL communication system.

With reference to the second aspect, in a possible design, one or more transmissions of the first transport block within the first channel occupancy time include a non-last transmission of the first transport block within the first channel occupancy time. Based on this solution, that the sending terminal device determines whether the last transmission of the first transport block succeeds within the first channel occupancy time does not affect transmission of the another transport block within the first channel occupancy time. Therefore, the sending terminal device may send the first indication information for the non-last transmission of the first transport block within the first channel occupancy time, and the sending terminal device may not send the first indication information for the last transmission of the first transport block within the first channel occupancy time.

With reference to the second aspect, in a possible design, that the sending terminal device obtains first channel occupancy time includes: The sending terminal device receives second indication information from a network device or another terminal device, where the second indication information indicates the first channel occupancy time; or the sending terminal device obtains the first channel occupancy time through a listen before talk LBT process. Based on this solution, several implementations of obtaining the first channel occupancy time are provided.

According to a third aspect, a communication method is provided. The method may be performed by a sending terminal device, may be performed by a component (such as a processor, a chip, or a chip system) of the sending terminal device, or may be implemented by a logical module or software that can implement all or some functions of the sending terminal device. The following uses an example in which the sending terminal device performs the method for description. The method includes: The sending terminal device obtains first channel occupancy time, where the first channel occupancy time includes transmission resources in a plurality of consecutive time units. If the sending terminal device determines that first transmission succeeds on a first transmission resource within the first channel occupancy time, where the first transmission is used to send a first transport block to a receiving terminal device; and determines that a second transmission resource of the first transport block exists within the first channel occupancy time, where a time domain position of the second transmission resource is after a time domain position of the first transmission resource, the sending terminal device performs second transmission by using the second transmission resource.

Based on the communication method provided in this embodiment of this application, when determining that the first transmission succeeds within the first channel occupancy time, the sending terminal device still performs the second transmission by using the second transmission resource. Therefore, a case in which another transmission resource of the first transport block after the first transmission resource is not used within the first channel occupancy time does not occur, and a case in which transmission of another transport block within the first channel occupancy time is affected because the sending terminal device subsequently no longer transmits the first transport block is avoided, thereby improving channel access efficiency and communication quality of an SL communication system.

With reference to the third aspect, in a possible design, the second transmission includes: transmitting the first transport block; transmitting padding information; or transmitting a second transport block.

With reference to the third aspect, in a possible design, the second transmission is transmitting the second transport block. The method further includes: The sending terminal device determines, based on priority information of the second transport block and priority information of first channel occupancy time, to transmit the second transport block by using the second transmission resource; or the sending terminal device determines, based on the time domain position of the second transmission resource and active time of a receiving terminal device of the second transport block, to transmit the second transport block by using the second transmission resource. Based on this solution, the sending terminal device can determine, based on a specific condition, whether to transmit the second transport block by using the second transmission resource.

With reference to the third aspect, in a possible design, that the sending terminal device obtains first channel occupancy time includes:
The sending terminal device receives second indication information from a network device or another terminal device, where the second indication information indicates the first channel occupancy time; or the sending terminal device obtains the first channel occupancy time through a listen before talk LBT process. Based on this solution, several implementations of obtaining the first channel occupancy time are provided.

According to a fourth aspect, a communication method is provided. The method may be performed by a sending terminal device, may be performed by a component (such as a processor, a chip, or a chip system) of the sending terminal device, or may be implemented by a logical module or software that can implement all or some functions of the sending terminal device. The following uses an example in which the sending terminal device performs the method for description. The method includes: The sending terminal device obtains first channel occupancy time, where the first channel occupancy time includes transmission resources in a plurality of consecutive time units; the sending terminal device determines that a first transport block needs to be transmitted a plurality of times within first channel transmission time; and the sending terminal device determines, based on the last transmission of the first transport block within the first channel occupancy time, whether a plurality of transmissions of the first transport block succeed.

Different from a current solution in which the sending terminal device needs to determine, for each transmission of the first transport block within the first channel occupancy time, whether the transmission succeeds, in this solution, the sending terminal device determines, based on the last transmission of the first transport block within the first channel occupancy time, whether the plurality of transmissions of the first transport block succeed, to avoid a case in which transmission of another transport block within the first channel occupancy time is affected because the sending terminal device determines, based on feedback corresponding to a particular transmission in non-last transmissions, that the transmission succeeds, and consequently subsequently no longer transmits the first transport block, thereby improving channel access efficiency and communication quality of an SL communication system.

With reference to the fourth aspect, in a possible design, the method further includes: The sending terminal device receives a first feedback resource, where the first feedback resource is a feedback resource corresponding to the last transmission of the first transport block within the first channel occupancy time; and that the sending terminal device determines, based on the last transmission of the first transport block within the first channel occupancy time, whether a plurality of transmissions of the first transport block succeed includes: The sending terminal device determines, based on the first feedback resource, whether the plurality of transmissions of the first transport block succeed. Based on this solution, the sending terminal device can determine, based on the last transmission of the first transport block within the first channel occupancy time, whether the plurality of transmissions of the first transport block succeed.

With reference to the fourth aspect, in a possible design, that the sending terminal device receives a first feedback resource includes:
The sending terminal device receives second feedback resources, where the second feedback resources are feedback resources respectively corresponding to the plurality of transmissions of the first transport block within the first channel occupancy time, and the second feedback resources include the first feedback resource; or the sending terminal device receives only the first feedback resource. Based on this solution, the sending terminal device can receive the feedback resources respectively corresponding to the plurality of transmissions, or can receive only a feedback resource corresponding to the last transmission.

With reference to the fourth aspect, in a possible design, the method further includes: The sending terminal device receives second feedback resources, where the second feedback resources are feedback resources respectively corresponding to the plurality of transmissions of the first transport block within the first channel occupancy time, and the second feedback resources include a feedback resource corresponding to the last transmission; and that the sending terminal device determines, based on the last transmission of the first transport block transmitted within the first channel occupancy time, whether the first transport block is successfully transmitted includes: The sending terminal device determines, based on the second feedback resources, whether the plurality of transmissions of the first transport block succeed. Based on this solution, the sending terminal device can jointly determine, with reference to a feedback resource corresponding to one or more of transmissions before the last transmission and the feedback resource corresponding to the last transmission, whether the plurality of transmissions of the first transport block succeed.

With reference to the fourth aspect, in a possible design, the method further includes: The sending terminal device sends one or more negative acknowledgment NACK feedbacks to a network device, where each of the one or more NACK feedbacks corresponds to one of non-last transmissions of the first transport block within the first channel occupancy time; or the sending terminal device determines not to send, to the network device, HARQ feedback corresponding to the non-last transmission of the first transport block within the first channel occupancy time.

In a current solution, if a particular transmission of the first transport block succeeds, the sending terminal device sends ACK feedback to the network device. The network device may consider, based on the ACK feedback, that the first transport block is successfully transmitted, and does not schedule, for the sending terminal device, a subsequent retransmission resource of the first transport block within the first channel occupancy time. Based on this solution, when receiving the NACK feedback corresponding to the non-last transmission of the first transport block within the first channel occupancy time, or receiving no corresponding HARQ feedback, the network device may consider that the non-last transmission of the first transport block fails within the first channel occupancy time, and continue to schedule, for the sending terminal device, a transmission resource of the first transport block within the first channel occupancy time, so that the sending terminal device transmits the first transport block within the first channel occupancy time. Alternatively, the network device does not change the transmission resource that is of the first transport block within the first channel occupancy time and that is previously scheduled for the sending terminal device, and the sending terminal device can still transmit the first transport block by using the transmission resource of the first transport block within the first channel occupancy time.

With reference to the fourth aspect, in a possible design, that the sending terminal device obtains first channel occupancy time includes:
The sending terminal device receives second indication information from a network device or another terminal device, where the second indication information indicates the first channel occupancy time; or the sending terminal device obtains the first channel occupancy time through a listen before talk LBT process. Based on this solution, several implementations of obtaining the first channel occupancy time are provided.

According to a fifth aspect, a communication apparatus is provided to implement the method according to the first aspect. The communication apparatus may be the sending terminal device in the first aspect, an apparatus including the sending terminal device, or an apparatus, for example, a chip, that is included in the sending terminal device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fifth aspect, in a possible design, the communication apparatus includes a transceiver module and a processing module. The processing module is configured to obtain first channel occupancy time, where the first channel occupancy time includes transmission resources in a plurality of consecutive time units. The processing module is further configured to determine that a first transmission resource is within the first channel occupancy time. The processing module is further configured to select a target logical channel from candidate logical channels, where the target logical channel is a logical channel that is hybrid automatic repeat request HARQ disabled, and selection of the target logical channel is irrelevant to a HARQ attribute of a candidate logical channel with a highest priority in the candidate logical channels. The processing module is further configured to generate a first transport block based on the target logical channel. The transceiver module is configured to send first indication information to a receiving terminal device corresponding to the first transport block, where the first indication information indicates that the first transport block is HARQ feedback disabled, and the first indication information corresponds to transmission of the first transport block on the first transmission resource.

With reference to the fifth aspect, in a possible design, the processing module is configured to obtain the first channel occupancy time, including: The processing module is configured to receive, through the transceiver module, second indication information from a network device or another terminal device, where the second indication information indicates the first channel occupancy time; or the processing module is configured to obtain the first channel occupancy time through a listen before talk LBT process.

According to a sixth aspect, a communication apparatus is provided to implement the method according to the second aspect. The communication apparatus may be the sending terminal device in the second aspect, an apparatus including the sending terminal device, or an apparatus, for example, a chip, that is included in the sending terminal device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the sixth aspect, in a possible design, the communication apparatus includes a transceiver module and a processing module. The processing module is configured to obtain first channel occupancy time, where the first channel occupancy time includes transmission resources in a plurality of consecutive time units. The processing module is further configured to: when a HARQ feedback attribute used during packet assembly of a first transport block is HARQ feedback enabled, send, through the transceiver module, one or more pieces of first indication information to a receiving terminal device corresponding to the first transport block, where each of the one or more pieces of first indication information corresponds to one transmission of the first transport block within the first channel occupancy time, and the first indication information indicates that the first transport block is HARQ feedback disabled.

With reference to the sixth aspect, in a possible design, one or more transmissions of the first transport block within the first channel occupancy time include a non-last transmission of the first transport block within the first channel occupancy time.

With reference to the sixth aspect, in a possible design, the processing module is configured to obtain the first channel occupancy time, including: The processing module is configured to receive second indication information from a network device or another terminal device through the transceiver module, where the second indication information indicates the first channel occupancy time; or the processing module is configured to obtain the first channel occupancy time through a listen before talk LBT process.

According to a seventh aspect, a communication apparatus is provided to implement the method according to the third aspect. The communication apparatus may be the sending terminal device in the third aspect, an apparatus including the sending terminal device, or an apparatus, for example, a chip, that is included in the sending terminal device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the seventh aspect, in a possible design, the communication apparatus includes a processing module and a transceiver module. The processing module is configured to obtain first channel occupancy time, where the first channel occupancy time includes transmission resources in a plurality of consecutive time units. The processing module is further configured to determine that first transmission succeeds on a first transmission resource within the first channel occupancy time, where the first transmission is used to send a first transport block to a receiving terminal device. The processing module is further configured to determine that a second transmission resource of the first transport block exists within the first channel occupancy time, where a time domain position of the second transmission resource is after a time domain position of the first transmission resource. The transceiver module is configured to perform second transmission by using the second transmission resource.

With reference to the seventh aspect, in a possible design, the second transmission includes: transmitting the first transport block, transmitting padding information, or transmitting a second transport block.

With reference to the seventh aspect, in a possible design, the second transmission is transmitting the second transport block. The processing module is further configured to determine, based on priority information of the second transport block and priority information of first channel occupancy time, to transmit the second transport block by using the second transmission resource; or the processing module is further configured to determine, based on the time domain position of the second transmission resource and active time of a receiving terminal device of the second transport block, to transmit the second transport block by using the second transmission resource.

With reference to the seventh aspect, in a possible design, the processing module is configured to obtain the first channel occupancy time, including: The processing module is configured to receive, through the transceiver module, second indication information from a network device or another terminal device, where the second indication information indicates the first channel occupancy time; or the processing module is configured to obtain the first channel occupancy time through a listen before talk LBT process.

According to an eighth aspect, a communication apparatus is provided to implement the method according to the fourth aspect. The communication apparatus may be the sending terminal device in the fourth aspect, an apparatus including the sending terminal device, or an apparatus, for example, a chip, that is included in the sending terminal device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the eighth aspect, in a possible design, the communication apparatus includes a processing module. The processing module is configured to obtain first channel occupancy time, where the first channel occupancy time includes transmission resources in a plurality of consecutive time units. The processing module is further configured to determine that a first transport block needs to be transmitted a plurality of times within first channel transmission time. The processing module is further configured to determine, based on the last transmission of the first transport block within the first channel occupancy time, whether a plurality of transmissions of the first transport block succeed.

With reference to the eighth aspect, in a possible design, the communication apparatus further includes a transceiver module. The transceiver module is configured to receive a first feedback resource, where the first feedback resource is a feedback resource corresponding to the last transmission of the first transport block within the first channel occupancy time. The processing module is configured to determine, based on the last transmission of the first transport block within the first channel occupancy time, whether the plurality of transmissions of the first transport block succeed, including: The processing module is configured to determine, based on the first feedback resource, whether the plurality of transmissions of the first transport block succeed.

With reference to the eighth aspect, in a possible design, the transceiver module is configured to receive the first feedback resource, including: The transceiver module is configured to receive second feedback resources, where the second feedback resources are feedback resources respectively corresponding to the plurality of transmissions of the first transport block within the first channel occupancy time, and the second feedback resources include the first feedback resource; or the transceiver module is configured to receive only the first feedback resource.

With reference to the eighth aspect, in a possible design, the communication apparatus further includes a transceiver module. The transceiver module is configured to receive second feedback resources, where the second feedback resources are feedback resources respectively corresponding to the plurality of transmissions of the first transport block within the first channel occupancy time, and the second feedback resources include a feedback resource corresponding to the last transmission. The processing module is configured to determine, based on the last transmission of the first transport block transmitted within the first channel occupancy time, whether the first transport block is successfully transmitted, including: The processing module is configured to determine, based on the second feedback resources, whether the plurality of transmissions of the first transport block succeed.

With reference to the eighth aspect, in a possible design, the communication apparatus further includes the transceiver module, where the transceiver module is configured to send one or more negative acknowledgment NACK feedbacks to a network device, where each of the one or more NACK feedbacks corresponds to one of non-last transmissions of the first transport block within the first channel occupancy time; or the processing module is further configured to determine not to send, to the network device, HARQ feedback corresponding to the non-last transmission of the first transport block within the first channel occupancy time.

With reference to the eighth aspect, in a possible design, the communication apparatus further includes the transceiver module. The processing module is configured to obtain the first channel occupancy time, including: The processing module is configured to receive second indication information from a network device or another terminal device through the transceiver module, where the second indication information indicates the first channel occupancy time; or the processing module is configured to obtain the first channel occupancy time through a listen before talk LBT process.

According to a ninth aspect, a communication apparatus is provided, and includes a processor. The processor is configured to execute instructions stored in a memory. When the processor executes the instructions, the communication apparatus is enabled to perform the method according to any one of the foregoing aspects. The communication apparatus may be the sending terminal device in any one of the foregoing aspects, an apparatus including the sending terminal device, or an apparatus, for example, a chip, that is included in the sending terminal device.

In a possible design, the communication apparatus further includes the memory. The memory is configured to store computer instructions. Optionally, the processor and the memory are integrated together, or the processor and the memory are separately disposed.

In a possible design, the memory is coupled to the processor, and is outside the communication apparatus.

According to a tenth aspect, a communication apparatus is provided, and includes a processor and an interface circuit. The interface circuit is configured to communicate with a module outside the communication apparatus. The processor is configured to perform the method according to any one of the foregoing aspects through a logic circuit or by running a computer program or instructions. The communication apparatus may be the sending terminal device in any one of the foregoing aspects, an apparatus including the sending terminal device, or an apparatus, for example, a chip, that is included in the sending terminal device.

Alternatively, the interface circuit may be a code/data read/write interface circuit. The interface circuit is configured to receive computer-executable instructions (where the computer-executable instructions are stored in a memory, and may be read from the memory directly or through another component) and transmit the computer-executable instructions to the processor, so that the processor runs the computer-executable instructions to perform the method in any one of the foregoing aspects.

In some possible designs, the communication apparatus may be a chip or a chip system.

According to an eleventh aspect, a computer-readable storage medium is provided. The computer-readable storage medium stores instructions, and when the instructions are run on a communication apparatus, the communication apparatus is enabled to perform the method according to any one of the foregoing aspects. The communication apparatus may be the sending terminal device in any one of the foregoing aspects, an apparatus including the sending terminal device, or an apparatus, for example, a chip, that is included in the sending terminal device.

According to a twelfth aspect, a computer program product including instructions is provided. When the computer program product runs on a communication apparatus, the communication apparatus is enabled to perform the method according to any one of the foregoing aspects. The communication apparatus may be the sending terminal device in any one of the foregoing aspects, an apparatus including the sending terminal device, or an apparatus, for example, a chip, that is included in the sending terminal device.

According to a thirteenth aspect, a communication apparatus (where for example, the communication apparatus may be a chip or a chip system) is provided. The communication apparatus includes a processor, configured to implement the function in any one of the foregoing aspects. In a possible design, the communication apparatus further includes a memory. The memory is configured to store necessary program instructions and data. When being a chip system, the communication apparatus may include a chip, or may include a chip and another discrete component.

For technical effects brought by any design manner in the third aspect to the eighth aspect, refer to the technical effects brought by different design manners in the first aspect and the second aspect. Details are not described herein.

According to a fourteenth aspect, a communication system is provided. The communication system includes a sending terminal device and a receiving terminal device. The sending terminal device is configured to implement the method according to any one of the first aspect to the fourth aspect.

For technical effects brought by any design manner in the fifth aspect to the fourteenth aspect, refer to the technical effects brought by different design manners in the first aspect to the fourth aspect. Details are not described herein.

### BRIEF DESCRIPTION OF DRAWINGS

FIG. 1 is a diagram of SL communication according to an embodiment of this application;
FIG. 2 is a diagram of using a scheduling resource by a terminal device in SL-U according to an embodiment of this application;
FIG. 3 is a diagram of multi-slot continuous transmission according to an embodiment of this application;
FIG. 4 is a diagram of an architecture of a communication system according to an embodiment of this application;
FIG. 5 is a diagram of a structure of a communication apparatus according to an embodiment of this application;
FIG. 6 is a diagram of interaction of a communication method according to an embodiment of this application;
FIG. 7 is a diagram of interaction of another communication method according to an embodiment of this application;
FIG. 8 is a diagram of interaction of another communication method according to an embodiment of this application;
FIG. 9 is a flowchart of another communication method according to an embodiment of this application;
FIG. 10 is a diagram of interaction of another communication method according to an embodiment of this application;
FIG. 11 is a flowchart of another communication method according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

For ease of understanding the technical solutions in embodiments of this application, conventional technologies of this application are first briefly described below.

### 1. LBT

In a wireless communication system, based on a difference between used frequency bands, the frequency bands may be classified into a licensed frequency band and an unlicensed frequency band. In the unlicensed frequency band, a device (a network device or a terminal device) needs to contend for a channel in a listen before talk LBT manner. The LBT is usually performed at a granularity of a channel (for example, 20 MHz). Specifically, before accessing a channel and starting to send data, the device needs to sense whether the channel is idle (idle). If the channel has been idle for specific time, the device may occupy the channel, and use the channel in corresponding COT. If the channel is not idle, the channel can be occupied only after it becomes idle again.

### 2. SL communication

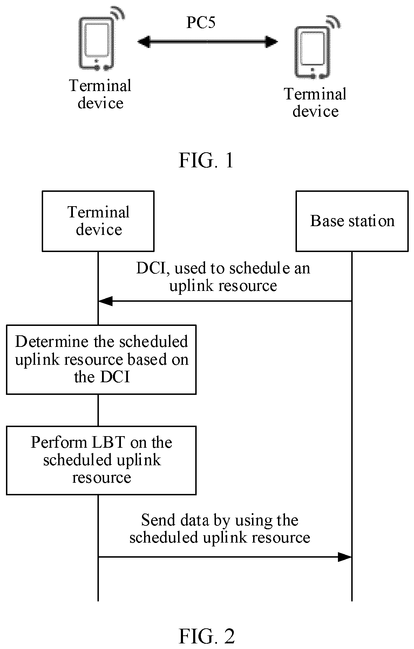

In a wireless communication system, terminal devices may communicate with each other through a PC5 interface. A transmission link in the PC5 interface is defined as an SL. Therefore, the communication between the terminal devices through the PC5 interface may also be referred to as SL communication. As shown in FIG. 1, FIG. 1 is a diagram of SL communication performed between terminal devices through a PC5 interface.

Currently, in a new radio (new radio, NR) system, two modes of allocating an SL resource (SL resource) to a terminal device in SL communication are defined: mode 1 and mode 2. The SL resource may also be referred to as an SL grant (SL grant), and is a time-frequency resource used to transmit data or information. In mode 1, a base station allocates the SL resource to the terminal device. Specifically, the base station may schedule the SL resource for the terminal device through downlink control information (downlink control information, DCI), or configure an SL configured grant (SL configured grant) for the terminal device through a radio resource control (radio resource control, RRC) message. However, mode 2 may be referred to as a user self-selection resource mode. In this mode, the terminal device does not depend on a base station when obtaining an SL resource, but needs to select the SL resource from a resource selection window based on a result of sensing performed by the terminal device in a sensing window, and reserves (reserves) the resource, or in other words, reserves the SL resource, to select the reserved SL resource to perform SL communication and transmit data.

### 3. Scenario in which SL communication is combined with an unlicensed spectrum, namely, a sidelink unlicensed spectrum communication (sidelink-unlicensed, SL-U) scenario

In conventional SL communication in which working is performed based on a licensed spectrum, after obtaining an SL resource, a terminal device may directly perform transmission by using the SL resource. For example, after a base station schedules an uplink resource for the terminal device, the terminal device may directly perform uplink transmission by using the uplink resource. However, in SL communication in which working is performed based on an unlicensed spectrum, if an SL resource obtained by the terminal device is not shared with the terminal device by another device after the another device successfully performs LBT (for example, after successfully performing LBT, the another terminal device indicates a resource within corresponding COT to the terminal device for use), the terminal device may need to perform LBT before using the SL resource. For example, as shown in FIG. 2, a base station schedules, for a terminal device, an uplink resource on which LBT is not performed. Before using the scheduled uplink resource, the terminal device needs to perform LBT on the uplink resource. The terminal device can perform uplink transmission by using the uplink resource only after LBT succeeds. A procedure thereof is shown in FIG. 2. In other words, if LBT performed by the terminal device on the scheduled uplink resource fails, the scheduled uplink resource cannot be used.

### 4. Hybrid automatic repeat request (hybrid automatic repeat request, HARQ) mechanism in SL communication

The SL communication supports the HARQ mechanism and flexible HARQ feedback enabling and disabling functions. Specifically, if a sending terminal device transmits a TB to a receiving terminal device once, the sending terminal device further sends, to the receiving terminal device, SCI corresponding to the current transmission, and indicates, in the SCI, whether the transmission of the TB is HARQ feedback enabled (HARQ feedback enabled) or HARQ feedback disabled (HARQ feedback disabled). The receiving terminal device determines, based on the indication information, whether to send HARQ feedback corresponding to the current transmission to the sending terminal device, and if the indication information indicates HARQ feedback enabled, needs to send the HARQ feedback corresponding to the current transmission to the sending terminal device, or if the indication information indicates HARQ feedback disabled, does not need to send the HARQ feedback corresponding to the current transmission to the sending terminal device.

The sending terminal device setting the SCI to be HARQ feedback enabled or HARQ feedback disabled is determined based on a HARQ feedback attribute (HARQ feedback enabled or HARQ feedback disabled) used during packet assembly of a medium access control (media access control, MAC) protocol data unit (protocol data unit, PDU) carried in a corresponding TB. In addition, the HARQ feedback attribute used during packet assembly of the MAC PDU is determined based on a HARQ feedback attribute of a logical channel (logical channel, LCH) and/or a MAC control element (control element, CE) included in the MAC PDU. For example, if the LCH included in the MAC PDU is an LCH that is HARQ feedback enabled, the HARQ feedback attribute used during packet assembly of the MAC PDU is HARQ feedback enabled. On the contrary, if the LCH included in the MAC PDU is HARQ feedback disabled, the HARQ feedback attribute used during packet assembly of the MAC PDU is HARQ feedback disabled.

It may be understood that, because one TB carries one MAC PDU, the SCI being set to be HARQ feedback enabled or HARQ feedback disabled may also be understood as being determined based on a HARQ feedback attribute used during packet assembly of a corresponding TB.

Further, the LCH and/or the MAC CE that can be (or in other words, are/is allowed to be) included in the MAC PDU are/is determined based on an SL logical channel priority prioritization (logical channel prioritization, LCP) process. In addition, the SL LCP is executed only when new transmission is performed. To be specific, whether a HARQ feedback attribute of a MAC PDU is HARQ feedback enabled or HARQ feedback disabled is uniquely determined during packet assembly during new transmission. For each transmission of the MAC PDU, HARQ feedback enabled/disabled indications specified for corresponding SCI are the same.

The SL-LCP includes selection of a destination (destination) and selection of a logical channel (logical channel, LCH). The selection of the destination and the selection of the LCH are used to determine an SL grant can be used (or referred to as allowed) to transmit data or signaling of which LCHs of which destination, and which LCHs are finally transmitted depends on a subsequent SL resource allocation result. The following describes two steps included in the SL LCP.

Step 1: Select a destination, where a destination corresponding to an LCH or a MAC CE that has a highest priority and that satisfies a first condition (refer to a current protocol for the first condition, which may be, for example, there is valid SL transmission data) in LCHs or MAC control elements (control elements, CEs) associated with unicast, multicast, and broadcast is selected.

Step 2: Select an LCH, where an LCH that satisfies a second condition in LCHs associated with the destination selected in step 1 is selected. When a physical sidelink feedback channel (physical sidelink feedback channel, PSFCH) is configured for the SL grant, the second condition may be the same as a HARQ feedback enabled/disabled attribute corresponding to the LCH selected in step 1. To be specific, LCHs whose HARQ feedback attributes are the same as a HARQ feedback attribute of the LCH with the highest priority are selected from the LCHs associated with the destination selected in step 1.

Optionally, the selecting an LCH in step 2 may include selecting an SL MAC CE.

In a PSFCH receiving procedure of an NR SL, in a mode 2 scenario, if a sending terminal device receives a corresponding acknowledgment (acknowledgment, ACK) after transmitting a MAC PDU, or corresponding SCI indicates that only a negative-only acknowledgment (negative-only acknowledgment) HARQ mechanism is accepted and no NACK is received, a MAC entity of the sending and receiving device considers that the transmission is the last transmission of the MAC PDU (or in other words, considers that the transmission succeeds), and does not subsequently retransmit the MAC PDU. In a mode 1 scenario, transmission scheduling is implemented by a base station.

The negative-only acknowledgment is a special HARQ mechanism for multicast. For multicast transmission by using this mechanism, if failing to decode the MAC PDU, the receiving terminal device feeds back a NACK; otherwise (the MAC PDU is successfully decoded), the receiving terminal device does not perform HARQ feedback.

### 5. Multi-consecutive slots transmission (Multi-consecutive slots transmission, MCSt)

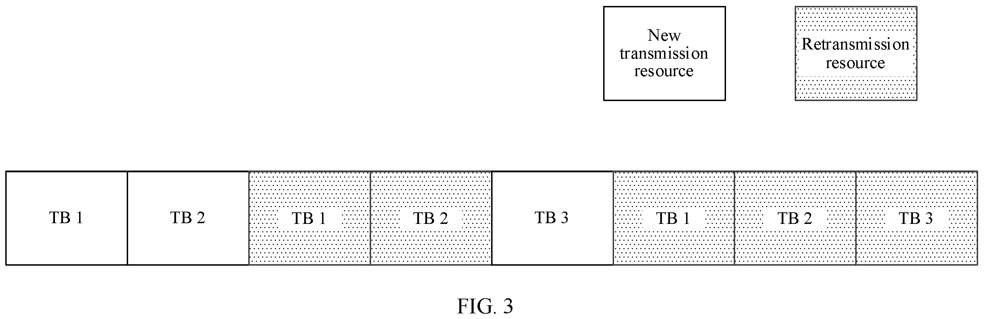

Currently, in SL communication, both mode 1 and mode 2 scenarios support MCSt. In this manner, a quantity of channel access times when a terminal device transmits one or more TBs can be reduced, thereby improving channel access efficiency of entire communication. In a nonlimiting example, as shown in FIG. 3, it is assumed that a terminal device transmits a plurality of TBs in an MCSt manner. If the terminal device successfully performs LBT before a new transmission resource of a TB 1, and preempts COT (where a plurality of consecutive slots included in the COT may respectively correspond to initial transmission resources and/or retransmission resources of the plurality of TBs), the terminal device is allowed to perform continuous transmission in the plurality of consecutive slots included in the COT, and the terminal device does not need to perform LBT again before using a subsequent retransmission resource of the TB 1 or a new transmission resource or retransmission resource of another TB.

However, when MCSt is performed in an SL-U scenario that supports a HARQ mechanism, the following problem is faced: When COT including a plurality of consecutive slots is used for transmission (where MCSt transmission is performed) of a plurality of TBs, if new transmission or one specific retransmission for a particular TB succeeds (where when an ACK is received, or no NACK is received for multicast transmission that uses a negative-only acknowledgment), based on a conventional technology, in the mode 2 scenario, a subsequent retransmission resource of the TB is not used to perform retransmission of the TB. However, if there is a transmission resource of another TB after the subsequent retransmission resource of the TB, because a sending terminal device does not use the subsequent retransmission resource of the TB, or in other words, interrupts continuous transmission in the COT, the transmission resource of the another TB in the COT cannot be directly used (the sending terminal device needs to successfully perform an LBT process again before using the transmission resource of the another TB). Consequently, efficiency and communication quality of SL-U are reduced.

As shown in FIG. 3, if initial transmission of the TB 1 succeeds, subsequent retransmission of the TB 1 in the COT is not performed based on the conventional technology. Therefore, retransmission of a TB 2 and new transmission and retransmission of a TB 3 can be performed only after LBT is successfully performed again. If first retransmission of the TB 1 succeeds, second retransmission of the TB 1 is not performed based on the conventional technology. Therefore, second retransmission of the TB 2 and first retransmission of the TB 3 can be performed only after LBT is successfully performed again. This increases an additional quantity of LBTs, and an LBT failure may subsequently occur. Consequently, channel access efficiency and communication quality of the SL-U are affected.

Embodiments of this application provide a communication method, apparatus, and system, to resolve the foregoing problems. The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The communication method provided in embodiments of this application is applicable to various communication systems. For example, the communication method provided in embodiments of this application may be applied to a long term evolution (long term evolution, LTE) system, a fifth generation mobile communication technology (5th generation mobile communication technology, 5G) system, or a system in which terminal devices can directly communicate with each other, for example, a device-to-device (device-to-device, D2D) system or a vehicle-to-everything (vehicle-to-everything, V2X) system, or another future-oriented new similar communication system such as a sixth generation (sixth-generation, 6G) system. This is not specifically limited in embodiments of this application.

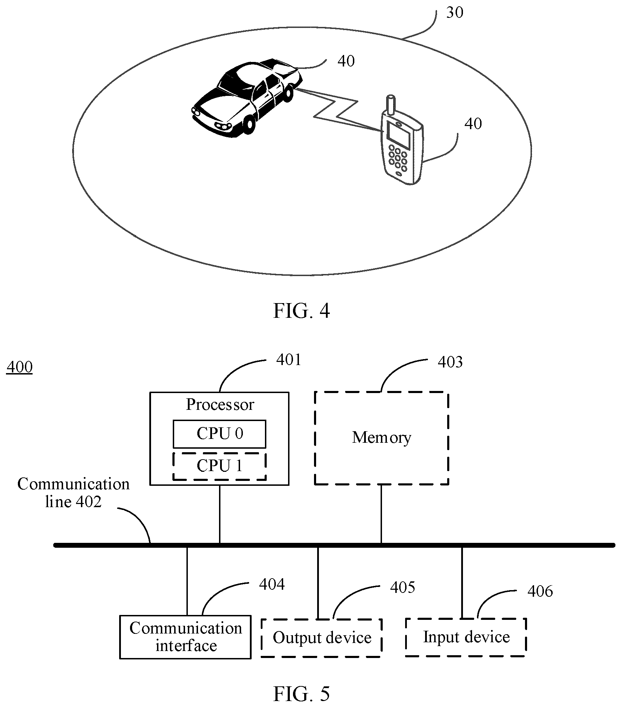

FIG. 4 shows a communication system 30 according to an embodiment of this application. The communication system 30 includes a plurality of terminal devices 40. Different terminal devices 40 may communicate with each other. The terminal device 40 may be located at a fixed position or may be mobile.

It should be noted that FIG. 4 is merely a diagram, and that the communication system 30 includes two terminal devices 40 is not limited in this embodiment of this application. In addition, although not shown in the figure, the communication system 30 may further include another device. For example, the communication system 30 may further include a network device, and the terminal device 40 may be within coverage of the network device, or may be outside coverage of the network device. This is not specifically limited herein.

Interaction between different terminal devices 40 shown in FIG. 4 is used as an example. In a communication method provided in embodiments of this application, a sending terminal device obtains first channel occupancy time, where the first channel occupancy time includes transmission resources in a plurality of consecutive time units. If the sending terminal device determines that a first transmission resource is within the first channel occupancy time, the sending terminal device selects a target logical channel from candidate logical channels, where the target logical channel is a logical channel that is hybrid automatic repeat request HARQ disabled, and selection of the target logical channel is irrelevant to a HARQ attribute of a candidate logical channel with a highest priority in the candidate logical channels. The sending terminal device generates a first transport block based on the target logical channel. Then, the sending terminal device sends first indication information to a receiving terminal device corresponding to the first transport block, where the first indication information indicates that the first transport block is HARQ feedback disabled, and the first indication information corresponds to transmission of the first transport block on the first transmission resource. Specific implementation and technical effects of this solution are described in detail in subsequent method embodiments, and details are not described herein.

Interaction between different terminal devices 40 shown in FIG. 4 is used as an example. In another communication method provided in embodiments of this application, a sending terminal device obtains first channel occupancy time, where the first channel occupancy time includes transmission resources in a plurality of consecutive time units. When a HARQ feedback attribute used during packet assembly of the first transport block is HARQ feedback enabled, the sending terminal device sends one or more pieces of first indication information to a receiving terminal device corresponding to the first transport block, where each of the one or more pieces of first indication information corresponds to one transmission of the first transport block within the first channel occupancy time, and the first indication information indicates that the first transport block is HARQ feedback disabled. Specific implementation and technical effects of this solution are described in detail in subsequent method embodiments, and details are not described herein.

Interaction between different terminal devices 40 shown in FIG. 4 is used as an example. In another communication method provided in embodiments of this application, a sending terminal device obtains first channel occupancy time, where the first channel occupancy time includes transmission resources in a plurality of consecutive time units. If the sending terminal device determines that first transmission succeeds on a first transmission resource within the first channel occupancy time, where the first transmission is used to send a first transport block to a receiving terminal device; and determines that a second transmission resource of the first transport block exists within the first channel occupancy time, where a time domain position of the second transmission resource is after a time domain position of the first transmission resource, the sending terminal device performs second transmission by using the second transmission resource. Specific implementation and technical effects of this solution are described in detail in subsequent method embodiments, and details are not described herein.

Interaction between different terminal devices 40 shown in FIG. 4 is used as an example. In another communication method provided in embodiments of this application, a sending terminal device obtains first channel occupancy time, where the first channel occupancy time includes transmission resources in a plurality of consecutive time units. If determining that the first transport block needs to be transmitted a plurality of times within the first channel transmission time, the sending terminal device determines, based on the last transmission of the first transport block within the first channel occupancy time, whether the plurality of transmissions of the first transport block succeed.

Optionally, the network device in embodiments of this application is a device that connects the terminal device to a wireless network. The network device in embodiments of this application may include base stations (base stations) in various forms, for example, may be a macro base station, a micro base station (also referred to as a small cell), a relay station, an access point, a transmitting point (transmitting point, TP), an evolved NodeB (evolved NodeB, eNodeB), a transmission reception point (transmission reception point, TRP), a next generation NodeB (next generation NodeB, gNB) in a 5G mobile communication system, a device that implements a base station function in a communication system evolved after 5G, a mobile switching center, a device that undertakes a base station function in device-to-device (Device-to-Device, D2D), vehicle-to-everything (vehicle-to-everything, V2X), or machine-to-machine (machine-to-machine, M2M) communication, or the like; may be a network device in an NTN communication system, that is, may be deployed on a high-altitude platform or a satellite; or may be a module or a unit that completes some functions of a base station, for example, may be a central unit (central unit, CU) in a cloud access network (cloud radio access network, C-RAN) system, or may be a distributed unit (distributed unit, DU). A specific technology and a specific device form that are used for the network device are not limited in embodiments of this application. All or some functions of the network device may alternatively be implemented by using a software function running on hardware, or may be implemented by using a virtualization function instantiated on a platform (for example, a cloud platform). In this application, unless otherwise specified, the network device is a radio access network device.

Optionally, the terminal device in embodiments of this application may be a device having a wireless transceiver function, or may be referred to as a terminal (terminal). The terminal device may be specifically user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a mobile terminal, a user terminal, a wireless communication device, a user agent, a user apparatus, or the like. The terminal device may alternatively be a satellite phone, a cellular phone, a smartphone, a cordless phone, a session initiation protocol (session initiation protocol, SIP) phone, a wireless data card, a wireless modem, a tablet computer, a computer with a wireless transceiver function, a wireless local loop (wireless local loop, WLL) station, a personal digital assistant (personal digital assistant, PDA), a handheld device with a wireless communication function, a computing device or another processing device connected to a wireless modem, a vehicle-mounted device, a communication device on a high-altitude aircraft, a wearable device, an uncrewed aerial vehicle, a robot, an intelligent point of sale (point of sale, POS) machine, a machine type communication device, a terminal device in D2D, a terminal device in V2X, a terminal device in virtual reality (virtual reality, VR), a terminal device in augmented reality (augmented reality, AR), a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. A specific technology and a specific device form that are used for the terminal device are not limited in embodiments of this application. All or some functions of the terminal device may alternatively be implemented by using a software function running on hardware, or may be implemented by using a virtualization function instantiated on a platform (for example, a cloud platform).

Optionally, in embodiments of this application, the network device or the terminal device may be deployed on the land, including an indoor device, an outdoor device, a handheld device, or a vehicle-mounted device; may be deployed on the water; or may be deployed on an airplane, a balloon, and a satellite in the air. Application scenarios of the network device or the terminal device are not limited in embodiments of this application.

Optionally, the network device or the terminal device in embodiments of this application may also be referred to as a communication apparatus, and may be a general-purpose device or a dedicated device. This is not specifically limited in embodiments of this application.

Optionally, a related function of the terminal device in embodiments of this application may be implemented by one device, may be jointly implemented by a plurality of devices, or may be implemented by one or more functional modules in one device. This is not specifically limited in embodiments of this application. It may be understood that the foregoing function may be a network element in a hardware device, a software function running on dedicated hardware, a combination of hardware and software, or a virtualized function instantiated on a platform (for example, a cloud platform).

For example, the related function of the terminal device in embodiments of this application may be implemented by a communication device 400 in FIG. 5. FIG. 5 is a diagram of a structure of a communication device 400 according to an embodiment of this application. The communication device 400 includes one or more processors 401, a communication line 402, and at least one communication interface (in FIG. 5, an example in which the communication device 400 includes a communication interface 404 and one processor 401 is merely used for description), and optionally, may further include a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a channel for connecting different components.

The communication interface 404 may be a transceiver module configured to communicate with another device or a communication network, such as an Ethernet, a RAN, or a wireless local area network (wireless local area network, WLAN). For example, the transceiver module may be an apparatus such as a transceiver or a transceiver machine. Optionally, the communication interface 404 may alternatively be a transceiver circuit located in the processor 401, configured to implement signal input and signal output of the processor.

The memory 403 may be an apparatus having a storage function. For example, the memory may be a read-only memory (read-only memory, ROM) or another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile disc, a Blu-ray disc, or the like), magnetic disk storage medium or another magnetic storage device, or any other medium that can carry or store desired program code in a form of instructions or a data structure and that can be accessed by a computer. However, this is not limited. The memory may exist independently, and is connected to the processor through the communication line 402. The memory may alternatively be integrated with the processor.

The memory 403 is configured to store computer-executable instructions for performing the solutions in this application, and the processor 401 controls execution. The processor 401 is configured to execute the computer-executable instructions stored in the memory 403, to implement communication methods provided in embodiments of this application.

Alternatively, optionally, in embodiments of this application, the processor 401 may perform processing-related functions in communication methods provided in the following embodiments, and the communication interface 404 is responsible for communication with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the processor 401 may include one or more CPUs, for example, a CPU 0 and a CPU 1 in FIG. 5.

During specific implementation, in an embodiment, the communication device 400 may include a plurality of processors. Each of these processors may be a single-core (single-core) processor or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform operation or processing.

During specific implementation, in an embodiment, the communication device 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, a projector (projector), or the like. The input device 406 communicates with the processor 401, and may receive an input of a user in a plurality of manners. For example, the input device 406 may be a mouse, a keyboard, a touchscreen device, a sensor device, or the like.

The communication device 400 may also be referred to as a communication apparatus sometimes, and may be a general-purpose device or a dedicated device. For example, the communication device 400 may be a desktop computer, a portable computer, a network server, a personal digital assistant (personal digital assistant, PDA), a mobile phone, a tablet computer, a wireless terminal device, an embedded device, the foregoing terminal device, the foregoing network device, or a device having a structure similar to that in FIG. 4. A type of the communication device 400 is not limited in this embodiment of this application.

The following describes in detail communication methods provided in embodiments of this application with reference to FIG. 1 to FIG. 5.

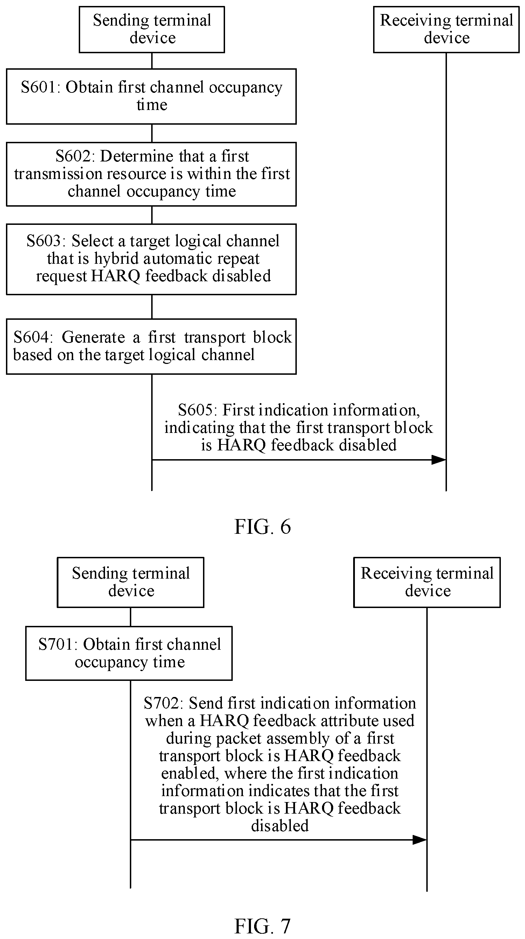

FIG. 6 shows a communication method according to an embodiment of this application. In FIG. 6, an example in which a sending terminal device (or referred to as a sending end terminal device) and a receiving terminal device (or referred to as a receiving end terminal device) are used as execution bodies of the interaction diagram is used to illustrate the method. However, the execution body of the interaction diagram is not limited in this application. For example, the sending terminal device in FIG. 6 may alternatively be a chip, a chip system, or a processor that supports the terminal device in implementing the method, or may be a logical module or software that can implement all or some functions of the sending terminal device. The receiving terminal device in FIG. 6 may alternatively be a chip, a chip system, or a processor that supports the terminal device in implementing the method, or may be a logical module or software that can implement all or some functions of the terminal device. The communication method includes S601 to S605.

S601: The sending terminal device obtains first channel occupancy time, where the first channel occupancy time includes transmission resources in a plurality of consecutive time units.

S602: The sending terminal device determines that a first transmission resource is within the first channel occupancy time.

S603: The sending terminal device selects a target logical channel from candidate logical channels, where the target logical channel is a logical channel that is hybrid automatic repeat request HARQ disabled, and selection of the target logical channel is irrelevant to a HARQ attribute of a candidate logical channel with a highest priority in the candidate logical channels.

S604: The sending terminal device generates a first transport block based on the target logical channel.

S605: The sending terminal device sends first indication information to a receiving terminal device corresponding to the first transport block, where the first indication information indicates that the first transport block is HARQ feedback disabled, and the first indication information corresponds to transmission of the first transport block on the first transmission resource. Correspondingly, the receiving terminal device receives the first indication information.

The communication method shown in FIG. 6 may be applied to SL communication. Further, the method may be applied to an SL-U scenario.

It should be noted that, in this embodiment of this application, the sending terminal device is a sending device of the first transport block (or in other words, transmission performed on the first transmission resource), and does not represent that the terminal device can send only data or signaling in SL communication. It may be understood that the terminal device can also receive data or signaling in communication with another terminal device or a network device. Similarly, the receiving terminal device of the first transport block refers to that the device is a receiving device of the first transport block, and does not represent that the terminal device can receive only data or signaling in SL communication. It may be understood that the terminal device can also send data or signaling in communication with another terminal device or a network device. It may be understood that the sending terminal device may also have another name, for example, referred to as a first terminal device, and the receiving terminal device of the first transport block may also have another name, for example, referred to as a second terminal device. This does not affect implementation of communication methods in embodiments of this application.

The following separately describes S601 to S605 in detail.

In S601, the first channel occupancy time is a period of time that includes the transmission resources in the plurality of consecutive time units. In other words, the first channel occupancy time is time occupied by the transmission resources in the plurality of consecutive time units in time domain.

Optionally, the time unit of the transmission resource in the first channel occupancy time may be a radio frame, a subframe, a slot, a symbol, a second, a millisecond, or the like. This is not specifically limited in this embodiment of this application.

The sending terminal device may obtain the first channel occupancy time in one of the following manners.

Manner 1: The sending terminal device receives second indication information from a network device or another terminal device, where the second indication information indicates the first channel occupancy time.

In this manner, after successfully performing LBT on a channel, the network device or the another terminal device preempts corresponding channel occupancy time, where the channel occupancy time includes the first channel occupancy time. The network device or the another terminal device indicates the first channel occupancy time to the sending terminal device through the second indication information. Because the network device or the another terminal device already successfully completes LBT, after determining the first channel occupancy time through the second indication information, the sending terminal device may not perform LBT, but directly use the first channel occupancy time. This manner may also be understood as that the network device or the another terminal device shares, with the sending terminal device, the first channel occupancy time obtained through LBT or the first channel occupancy time within the channel occupancy time obtained through the LBT.

Optionally, the second indication information may indicate a start time domain position and an end time domain position of the first channel occupancy time. Alternatively, the second indication information may indicate a start time domain position and duration of the first channel occupancy time. Alternatively, the second indication information may indicate an end time domain position and duration of the first channel occupancy time. For example, the second indication information may indicate an index (index) of a slot in which the start time domain position of the first channel occupancy time is located, and indicate a quantity of slots included in the first channel occupancy time.

Manner 2: The sending terminal device obtains the first channel occupancy time through an LBT process.

In this manner, after successfully performing LBT on a channel, the sending terminal device determines that the first channel occupancy time can be used on the channel. For example, it is assumed that this manner is applied to a mode 2 scenario. After the sending terminal device selects a plurality of consecutive SL resources from a resource pool, and the sending terminal device successfully performs LBT on channels corresponding to the selected SL resources, duration occupied by the plurality of consecutive SL resources is the first channel occupancy time. For another example, it is assumed that this manner is applied to a mode 1 scenario. The network device schedules a plurality of consecutive SL resources for the sending terminal device, and the sending terminal device obtains the first channel occupancy time after successfully performing LBT on channels corresponding to the scheduled SL resources, where the first channel occupancy time may include the plurality of consecutive SL resources, or may include some of the plurality of consecutive SL resources.

In S602, the first transmission resource is an SL resource that can be used to transmit data. When determining, for the first transmission resource, data that the first transmission resource can be used (or allowed) to transmit, the sending terminal device determines whether the first transmission resource is within the first channel occupancy time. The sending terminal device performs S603 if the first transmission resource is within the first channel occupancy time.

Optionally, the first transmission resource may be an SL resource scheduled by the network device for the sending terminal device, may be an SL configured grant (configured grant) configured by the network device for the sending terminal device, or may be an SL resource selected by the sending terminal device in a resource pool.

In S603, when selecting, for the first transmission resource, a logical channel allowed to be used for transmission, the sending terminal device does not consider a logical channel whose HARQ feedback attribute (or HARQ attribute) is HARQ feedback enabled (HARQ feedback enabled), or in other words, considers only a logical channel that is HARQ feedback disabled (HARQ feedback disabled).

Specifically, the sending terminal device selects, from the candidate logical channels, a candidate logical channel that is HARQ feedback disabled, as the target logical channel that can be used for transmission on the first transmission resource. The candidate logical channels are logical channels corresponding to a destination (destination) that is selected by the sending terminal device and that corresponds to a logical channel that has a highest priority and that meets a first condition. For a specific manner of selecting a destination by the sending terminal device, refer to how the terminal device selects a destination in a current SL LCP process.

Optionally, the first transmission resource may be a new transmission resource of a particular transport block (transport block, TB) (where the transport block may be referred to as the first transport block) within the first channel occupancy time. The sending terminal device may perform S603 when performing SL LCP for the first transmission resource.

In a current SL LCP process, when a PSFCH is configured for the first transmission resource, the terminal device needs to select, based on the HARQ attribute of the candidate logical channel with the highest priority, a candidate logical channel whose HARQ attribute is the same as the HARQ attribute of the candidate logical channel with the highest priority. Therefore, if the candidate logical channel with the highest priority is HARQ feedback enabled, logical channels that are selected by the terminal device for the first transmission resource and on which transmission is allowed are all HARQ feedback enabled. However, in S603, when selecting the target logical channel, the sending terminal device does not need to consider whether the candidate logical channel with the highest priority is HARQ feedback enabled or HARQ feedback disabled, or in other words, selection of the target logical channel is irrelevant to the HARQ attribute of the candidate logical channel with the highest priority, but the sending terminal device needs to select, as the target logical channel from the candidate logical channels, only a logical channel that is HARQ disabled. Therefore, that the sending terminal device performs S603 can ensure that the logical channel used for transmission on the first transmission resource is HARQ feedback disabled.

Optionally, if the first transmission resource is not within the first channel occupancy time, the sending terminal device may not perform S603, but selects, for the first transmission resource based on a current SL LCP process, a logical channel allowed to be used for transmission.

Optionally, when the sending terminal device selects, for the first transmission resource, a MAC CE that is allowed to be used for transmission, for a manner of selecting the MAC CE, refer to the manner of selecting the target logical channel in S603. Only a MAC CE that is HARQ feedback disabled is considered, but a logical channel that is HARQ feedback enabled is not considered.

In S604, the sending terminal device generates the first transport block based on the selected target logical channel, where the first transport block is used to transmit to-be-transmitted data corresponding to the target logical channel. It may be understood that, because the target logical channel is HARQ disabled, the first transport block used to transmit the to-be-transmitted data corresponding to the target logical channel is also HARQ disabled. In other words, the first transport block includes a logical channel that is HARQ feedback disabled.

Optionally, the first transport block may be generated based on each target logical channel, or may be generated based on some target logical channels. For example, when a size of the first transmission resource is insufficient to transmit to-be-transmitted data corresponding to all target logical channels, the sending terminal device may select some target logical channels to generate the first transport block.

The first transport block may be transmitted on the first transmission resource. Further, in addition to the first transmission resource, another transmission resource of the first transport block may exist within the first channel occupancy time, and the first transport block may be transmitted on the another transmission resource. For example, if the first transmission resource is a new transmission resource of the first transport block, a retransmission resource of the first transport block may exist within the first channel occupancy time.

Optionally, if the sending terminal device selects the MAC CE that is HARQ feedback disabled for the first transmission resource, the sending terminal device may also generate the first transport block based on the selected MAC CE, and perform S605.

In S605, the sending terminal device determines the first indication information based on the HARQ attribute of the first transport block, where the first indication information indicates that the first transport block is HARQ feedback disabled. For example, the first indication information may be sidelink control information (sidelink control information, SCI).

The sending terminal device sends the first indication information to the receiving terminal device. The first indication information corresponds to transmission of the first transport block on the first transmission resource. After receiving the first indication information, the receiving terminal device may determine, based on an indication of the first indication information, that the first transport block is HARQ feedback disabled, and then determine that the receiving terminal device does not need to send HARQ feedback to the sending terminal device for the first transport block transmitted by the sending terminal device on the first transmission resource.

It should be noted that, in this embodiment of this application, a time sequence in which the sending terminal device sends the first indication information to the receiving terminal device and the sending terminal device sends the first transport block to the receiving terminal device is not limited. For example, the sending terminal device may simultaneously send (where the simultaneous sending herein may refer to sending in a same time unit, for example, sending in a same slot) the first transport block and first indication information corresponding to current transmission to the receiving terminal device, or may send, before sending the first transport block to the receiving terminal device, first indication information corresponding to current transmission.

Optionally, if another transmission resource of the first transport block further exists within the first channel occupancy time, the sending terminal device may determine, based on the HARQ attribute of the first transport block, first indication information corresponding to transmission of the first transport block on the another transmission resource, and send the first indication information to the receiving terminal device.

The receiving terminal device does not send, to the sending terminal device based on the indication of the first indication information, HARQ feedback corresponding to transmission on the first transmission resource. Therefore, based on a current HARQ feedback mechanism, when not receiving an ACK, the sending terminal device does not consider that transmission performed on the first transmission resource succeeds (in other words, does not consider that transmission performed on the first transmission resource is the last transmission of the first transport block). In this case, if another transmission resource following the first transmission resource further exists within the first channel occupancy time, the sending terminal device further continues to transmit the first transport block on the another transmission resource, to avoid a case in which transmission of another transport block within the first channel occupancy time is affected because the sending terminal device subsequently no longer transmits the first transport block.

Optionally, after S602, if the sending terminal device determines that only a logical channel or a MAC CE that is HARQ feedback enabled is to be transmitted, because there is no logical channel or MAC CE that is HARQ feedback disabled, the sending terminal device may ignore (or discard) the first transmission resource in this case, and does not perform S603 to S605.

Optionally, in S601 to S605, the transport block may be replaced with a MAC protocol data unit (media access control protocol data unit, MAC PDU).

FIG. 7 shows another communication method according to an embodiment of this application. In FIG. 7, an example in which a sending terminal device (or referred to as a sending end terminal device) and a receiving terminal device (or referred to as a receiving end terminal device) are used as execution bodies of the interaction diagram is used to illustrate the method. However, the execution body of the interaction diagram is not limited in this application. For example, the sending terminal device in FIG. 7 may alternatively be a chip, a chip system, or a processor that supports the terminal device in implementing the method, or may be a logical module or software that can implement all or some functions of the sending terminal device. The receiving terminal device in FIG. 7 may alternatively be a chip, a chip system, or a processor that supports the terminal device in implementing the method, or may be a logical module or software that can implement all or some functions of the terminal device. The communication method includes S701 and S702.

S701: The sending terminal device obtains first channel occupancy time, where the first channel occupancy time includes transmission resources in a plurality of consecutive time units.

S702: When a HARQ feedback attribute used during packet assembly of a first transport block is HARQ feedback enabled, the sending terminal device sends one or more pieces of first indication information to a receiving terminal device corresponding to the first transport block, where each of the one or more pieces of first indication information corresponds to one transmission of the first transport block within the first channel occupancy time, and the first indication information indicates that the first transport block is HARQ feedback disabled. Correspondingly, the receiving terminal device receives the one or more pieces of first indication information.

The communication method shown in FIG. 7 may be applied to SL communication. Further, the method may be applied to an SL-U scenario.

For specific implementation of S701, refer to the foregoing description of S601. Details are not described herein.

The following describes S702 in detail.

In a possible implementation of S702, after a sending terminal device determines that a first transport block is transmitted one or more times within first channel occupancy time, the sending terminal device determines and sends corresponding first indication information to a receiving terminal device for each transmission of the first transport block within the first channel occupancy time. The first indication information indicates that the first transport block is HARQ feedback disabled. For example, the first indication information is carried in SCI.

Correspondingly, after receiving the first indication information, the receiving terminal device may determine, based on an indication of the first indication information, that the first transport block is HARQ feedback disabled, and then determine that the receiving terminal device does not need to send HARQ feedback to the sending terminal device for transmission that is of the first transport block and that corresponds to the first indication information.

It should be noted that, in this implementation, the first indication information determined by the sending terminal device is not determined based on a HARQ feedback attribute used during packet assembly of the first transport block. In other words, when the HARQ feedback attribute used during packet assembly of the first transport block is any attribute (including HARQ feedback enabled or HARQ feedback disabled), for each transmission of the first transport block within the first channel occupancy time, the sending terminal device always sends, to the receiving terminal device, the first indication information indicating that the first transport block is HARQ feedback disabled.

That the HARQ feedback attribute used during packet assembly of the first transport block is HARQ feedback enabled may also be understood as that a HARQ feedback attribute of a logical channel and/or a MAC CE included in the first transport block is HARQ feedback enabled. That the HARQ feedback attribute used during packet assembly of the first transport block is HARQ feedback disabled may also be understood as that a HARQ attribute of a logical channel and/or a MAC CE included in the first transport block is HARQ feedback disabled.

Optionally, all transmissions of the first transport block within the first channel occupancy time include new transmission of the first transport block within the first channel occupancy time. Alternatively, all transmissions of the first transport block within the first channel occupancy time include new transmission and retransmission of the first transport block within the first channel occupancy time.

Different from a current solution in which a corresponding HARQ feedback attribute indicating a transport block is sent based on a HARQ feedback attribute used during packet assembly of the transport block, in this solution, even if the HARQ feedback attribute used during packet assembly of the first transport block is HARQ feedback enabled, the sending terminal device still sends, to the receiving terminal device, indication information indicating that the HARQ feedback attribute of the first transport block is HARQ feedback disabled, to ensure that the receiving terminal device does not send corresponding HARQ feedback to the sending terminal device under the indication of the first indication information, so that a case in which transmission of another transport block within the first channel occupancy time is affected because the sending terminal device determines, based on the received HARQ feedback, that a particular transmission of the first transport block succeeds within the first channel occupancy time, and consequently subsequently no longer transmits the first transport block is avoided.

In another possible implementation of S702, after the sending terminal device determines that the first transport block is transmitted a plurality of times within the first channel occupancy time, the sending terminal device determines and sends, to the receiving terminal device, corresponding first indication information for non-once transmissions of the first transport block within the first channel occupancy time. The first indication information indicates that the first transport block is HARQ feedback disabled. For example, the first indication information may be SCI.

Correspondingly, after receiving the first indication information, the receiving terminal device may determine, based on an indication of the first indication information, that the first transport block is HARQ feedback disabled, and then determine that the receiving terminal device does not need to send HARQ feedback to the sending terminal device for transmission that is of the first transport block and that corresponds to the first indication information.

It should be noted that, in this implementation, for a non-last transmission of the first transport block within the first channel occupancy time, the first indication information determined by the sending terminal device is not determined based on the HARQ feedback attribute used during packet assembly of the first transport block. In other words, when the HARQ feedback attribute used during packet assembly of the first transport block is any attribute (including HARQ feedback enabled or HARQ feedback disabled), for the non-last transmission of the first transport block within the first channel occupancy time, the sending terminal device always sends, to the receiving terminal device, the first indication information indicating that the first transport block is HARQ feedback disabled.

Optionally, the non-once transmissions of the first transport block within the first channel occupancy time include new transmission of the first transport block within the first channel occupancy time. Alternatively, the non-last transmission of the first transport block within the first channel occupancy time includes new transmission and non-last retransmission of the first transport block within the first channel occupancy time.

Optionally, in this implementation, for the last transmission of the first transport block within the first channel occupancy time, the sending terminal device may determine, based on the HARQ feedback attribute used during packet assembly of the first transport block, and send, to the receiving terminal device, indication information indicating the HARQ feedback attribute of the first transport block. Specifically, if the HARQ feedback attribute used during packet assembly of the first transport block is HARQ feedback enabled, for the last transmission of the first transport block within the first channel occupancy time, the sending terminal device sends, to the receiving terminal device, indication information indicating that the first transport block is HARQ feedback enabled. If the HARQ feedback attribute used during packet assembly of the first transport block is HARQ feedback disabled, for the last transmission of the first transport block within the first channel occupancy time, the sending terminal device sends, to the receiving terminal device, indication information indicating that the first transport block is HARQ feedback disabled. For example, the indication information may be carried in SCI.

Optionally, if the first transport block is transmitted only once within the first channel occupancy time, for the transmission, the sending terminal device may determine, based on the HARQ feedback attribute used during packet assembly of the first transport block, and send, to the receiving terminal device, indication information indicating the HARQ feedback attribute of the first transport block.

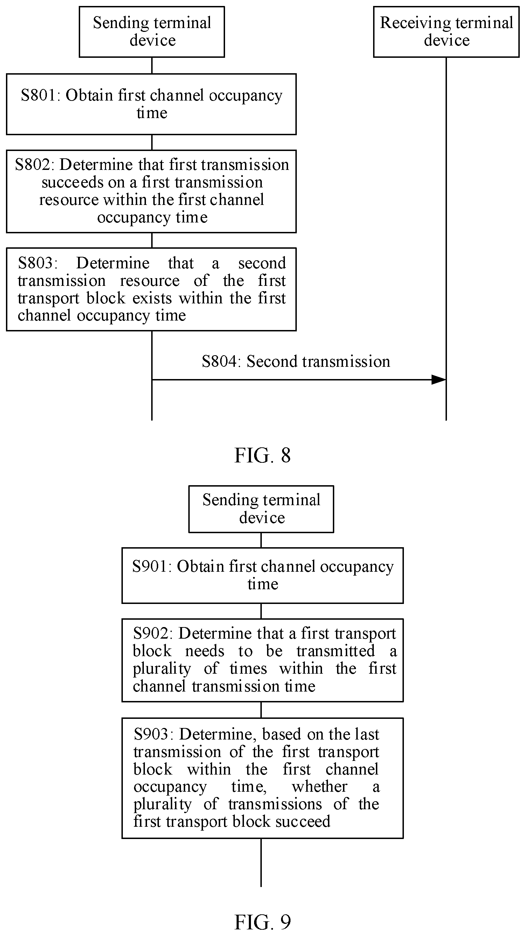

FIG. 8 shows another communication method according to an embodiment of this application. In FIG. 8, an example in which a sending terminal device (or referred to as a sending end terminal device) and a receiving terminal device (or referred to as a receiving end terminal device) are used as execution bodies of the interaction diagram is used to illustrate the method. However, the execution body of the interaction diagram is not limited in this application. For example, the sending terminal device in FIG. 8 may alternatively be a chip, a chip system, or a processor that supports the terminal device in implementing the method, or may be a logical module or software that can implement all or some functions of the sending terminal device. The receiving terminal device in FIG. 8 may alternatively be a chip, a chip system, or a processor that supports the terminal device in implementing the method, or may be a logical module or software that can implement all or some functions of the terminal device. The communication method includes S801 to S804.

S801: The sending terminal device obtains first channel occupancy time, where the first channel occupancy time includes transmission resources in a plurality of consecutive time units.

S802: The sending terminal device determines that first transmission succeeds on a first transmission resource within the first channel occupancy time, where the first transmission is used to send a first transport block to the receiving terminal device.

S803: The sending terminal device determines that a second transmission resource of the first transport block exists within the first channel occupancy time, where a time domain position of the second transmission resource is after a time domain position of the first transmission resource.

S804: The sending terminal device performs second transmission by using the second transmission resource.

The communication method shown in FIG. 8 may be applied to SL communication. Further, the method may be applied to an SL-U scenario.

For specific implementation of S801, refer to the foregoing description of S601. Details are not described herein.

The following describes S802 to S804 in detail.

In S802, the sending terminal device sends the first transport block to the receiving terminal device on the first transmission resource within the first channel occupancy time. Transmission performed by the sending terminal device on the first transmission resource may be referred to as first transmission. Afterwards, the sending terminal device may determine, based on a feedback resource corresponding to the first transmission resource, for example, a PSFCH corresponding to the first transmission resource, whether the first transmission succeeds.

Optionally, the first transmission resource may be a new transmission or retransmission resource of the first transport block within the first channel occupancy time.

In a possible implementation, if the sending terminal device receives, on the feedback resource corresponding to the first transmission resource, feedback information that is sent by the receiving terminal device and that indicates a reception success, the sending terminal device determines that the first transmission succeeds. For example, the feedback information indicating the reception success may be an ACK. Alternatively, if the sending terminal device does not receive, on the feedback resource corresponding to the first transmission resource, feedback information that is sent by the receiving terminal device and that indicates a reception error, the sending terminal device determines that the first transmission succeeds. For example, the feedback information indicating the reception error may be a NACK.

The sending terminal device may perform S803 if the sending terminal device determines that the first transmission succeeds; or the sending terminal device does not perform S803 if the sending terminal device determines that the first transmission fails.

In S803, the sending terminal device determines whether the second transmission resource that is of the first transport block and whose time domain position is after the time domain position of the first transmission resource exists within the first channel occupancy time. The sending terminal device may perform S804 if the second transmission resource exists. If the second transmission resource does not exist, the sending terminal device determines that the first transmission is the last transmission of the first transport block, and does not perform S804.

The second transmission resource may be a retransmission resource of the first transport block within the first channel occupancy time. For example, the second transmission resource may be a transmission resource reserved for the first transport block after the terminal device obtains the first channel occupancy time.

In S804, the sending terminal device may perform the second transmission by using the second transmission resource.

When determining that the first transmission succeeds within the first channel occupancy time, the sending terminal device still performs the second transmission by using the second transmission resource. Therefore, a case in which another transmission resource of the first transport block following the first transmission resource is not used within the first channel occupancy time does not occur, to avoid a case in which transmission of another transport block within the first channel occupancy time is affected because the sending terminal device subsequently no longer transmits the first transport block.

In S804, the second transmission may include any one of the following:
transmitting the first transport block to the receiving terminal device of the first transport block, where it may be understood that, in this case, performing the second transmission may also be referred to as performing retransmission of the first transport block by using the second transmission resource;
transmitting padding information, where for example, the padding information may be information with blank content, and it should be noted that a receiving device of the padding information is not limited in this embodiment of this application, and the receiving device may be any terminal device different from the sending terminal device, for example, the receiving terminal device of the first transport block; and
transmitting a second transport block to a receiving terminal device of the second transport block, where the second transport block is a transport block different from the first transport block, and optionally, in this case, the sending terminal device may use the second transmission resource to perform new transmission or retransmission of the second transport block, or in other words, the second transmission resource may be a new transmission or retransmission resource of the second transport block within the first channel occupancy time.

Optionally, within the first channel occupancy time, the sending terminal device may not reserve a transmission resource, before the second transmission resource, for transmission of the second transport block. Alternatively, the sending terminal device may reserve a transmission resource, before the second transmission resource, for transmission of the second transport block.

Optionally, when a specific condition is satisfied, the sending terminal device may transmit the second transport block by using the second transmission resource. The following describes several possible manners of determining whether to transmit the second transport block by using the second transmission resource.

Manner 1: The sending terminal device determines, based on priority information of the second transport block and priority information of the first channel occupancy time, whether the second transport block can be transmitted by using the second transmission resource.

In this implementation, when a priority of the second transport block is not lower than a priority of the first channel occupancy time, the sending terminal device may determine that the second transmission resource can be (or is allowed to be) used to transmit the second transport block. The second transmission resource is not used to transmit the second transport block when a priority of the second transport block is lower than a priority of the first channel occupancy time.

For example, the priority of the second transport block or the first channel occupancy time may be a channel access priority class (channel access priority class, CAPC).

Manner 2: The sending terminal device may determine, based on the time domain position of the second transmission resource and active time (active time) of the receiving terminal device of the second transport block, whether to transmit the second transport block by using the second transmission resource.

In this implementation, when the time domain position of the second transmission resource is within the active time of the receiving terminal device of the second transport block, the sending terminal device may determine that the second transmission resource can be used to transmit the second transport block. The second transmission resource is not used to transmit the second transport block when the time domain position of the second transmission resource is not within the active time of the receiving terminal device of the second transport block.

Optionally, the sending terminal device may determine, based on one of Manner 1 and Manner 2 above, whether to transmit the second transport block by using the second transmission resource. Alternatively, the sending terminal device may determine, with reference to Manner 1 and Manner 2 above together, whether to transmit the second transport block by using the second transmission resource.

Optionally, if the sending terminal device determines, in S803, that the second transmission resource of the first transport block exists within the first channel occupancy time, the sending terminal device may not perform S804, but trigger to perform an LBT process on the second transmission resource.

FIG. 9 shows another communication method according to an embodiment of this application. In FIG. 9, an example in which a sending terminal device (or referred to as a sending end terminal device) is used as an execution body of the communication method is used to illustrate the method. However, the execution body of the communication method is not limited in this application. For example, the sending terminal device in FIG. 9 may alternatively be a chip, a chip system, or a processor that supports the terminal device in implementing the method, or may be a logical module or software that can implement all or some functions of the sending terminal device. The communication method includes S901 to S903.

S901: The sending terminal device obtains first channel occupancy time, where the first channel occupancy time includes transmission resources in a plurality of consecutive time units.

S902: The sending terminal device determines that a first transport block needs to be transmitted a plurality of times within the first channel transmission time.

S903: The sending terminal device determines, based on the last transmission of the first transport block within the first channel occupancy time, whether a plurality of transmissions of the first transport block succeed.

The communication method shown in FIG. 9 may be applied to SL communication. Further, the method may be applied to an SL-U scenario.

For specific implementation of S901, refer to the foregoing description of S601. Details are not described herein.

The following describes S902 and S903 in detail.

In S902, that the sending terminal device determines that the first transport block needs to be transmitted a plurality of times within the first channel transmission time may also be understood as that the sending terminal device determines that the first transport block has a plurality of transmission resources within the first channel occupancy time, where the plurality of transmission resources include a new transmission resource and a retransmission resource.

In S903, the sending terminal device determines, based on the last transmission of the first transport block within the first channel occupancy time, whether a plurality of transmissions of the first transport block succeed (which may also be referred to as determining whether the first transport block is successfully transmitted within the first channel occupancy time). There may be a plurality of implementations, which are separately described below.

Implementation 1: The sending terminal device receives only a first feedback resource, where the first feedback resource is a feedback resource corresponding to the last transmission of the first transport block within the first channel occupancy time. In other words, within the first channel occupancy time, the sending terminal device does not receive a feedback resource corresponding to a non-last transmission of the first transport block.

For example, the feedback resource may be a PSFCH.

After receiving the first feedback resource, the sending terminal device determines, based on the first feedback resource, whether the plurality of transmissions of the first transport block succeed within the first channel occupancy time. In a possible implementation, if the sending terminal device receives, on the first feedback resource, feedback information that is sent by a receiving terminal device of the first transport block and that indicates a reception success, the sending terminal device determines that the plurality of transmissions of the first transport block succeed. For example, the feedback information indicating the reception success may be an ACK. Alternatively, if the sending terminal device does not receive, on the first feedback resource, feedback information that is sent by a receiving terminal device of the first transport block and that indicates a reception error, the sending terminal device determines that the plurality of transmissions of the first transport block succeed. For example, the feedback information indicating the reception error may be a NACK.

Implementation 2: The sending terminal device receives second feedback resources, where the second feedback resources are feedback resources respectively corresponding to the plurality of transmissions of the first transport block within the first channel occupancy time, and the second feedback resources include the first feedback resource.

Optionally, the second feedback resources may be feedback resources respectively corresponding to all transmissions of the first transport block within the first channel occupancy time.

The sending terminal device ignores (ignore) or discards another feedback resource other than the first feedback resource in the second feedback resources, and determines, based on the first feedback resource, whether the plurality of transmissions of the first transport block succeed within the first channel occupancy time. For specific implementation of determining, by the sending terminal device based on the first feedback resource, whether the plurality of transmissions of the first transport block succeed within the first channel occupancy time, refer to the descriptions above. Details are not described herein.

Implementation 3: The sending terminal device receives second feedback resources, and determines, based on the first feedback resource, whether the plurality of transmissions of the first transport block succeed within the first channel occupancy time. It may be understood that because the second feedback resources include the first feedback resource, this implementation may also be understood as follows: When receiving a feedback resource corresponding to the last transmission of the first transport block within the first channel occupancy time, the sending terminal device determines, with reference to a feedback resource corresponding to transmission before the last transmission, whether the plurality of transmissions of the first transport block succeed within the first channel occupancy time.

For example, if feedback information indicating a reception success is more than feedback information indicating a reception failure in the second feedback resources received by the sending terminal device, the sending terminal device may determine that the plurality of transmissions of the first transport block succeed within the first channel occupancy time.

Different from a current solution in which the sending terminal device needs to determine, for each transmission of the first transport block within the first channel occupancy time, whether the transmission succeeds, in this solution, the sending terminal device determines, based on the last transmission of the first transport block within the first channel occupancy time, whether the plurality of transmissions of the first transport block succeed, to avoid a case in which transmission of another transport block within the first channel occupancy time is affected because the sending terminal device determines, based on feedback corresponding to a particular transmission in non-last transmissions, that the transmission succeeds, and consequently subsequently no longer transmits the first transport block.

Optionally, when the sending terminal device works in a mode 1 scenario, the sending terminal device may send one or more NACK feedbacks to a network device, where each of the one or more NACK feedbacks may correspond to one of non-last transmissions of the first transport block within the first channel occupancy time. Alternatively, each NACK feedback may correspond to one of all transmissions of the first transport block within the first channel occupancy time.

Optionally, the NACK feedback may be carried on a physical uplink control channel (physical uplink control channel, PUCCH) or a physical uplink shared channel (physical uplink shared channel, PUSCH).

In a current solution, if a particular transmission of the first transport block succeeds, the sending terminal device sends ACK feedback to the network device. The network device may consider, based on the ACK feedback, that the first transport block is successfully transmitted, and does not schedule, for the sending terminal device, a subsequent retransmission resource of the first transport block within the first channel occupancy time. Based on this solution, the network device may consider, based on the NACK feedback sent by the sending terminal device, that the non-last transmission or each transmission of the first transport block fails within the first channel occupancy time, and continue to schedule, for the sending terminal device, a transmission resource of the first transport block within the first channel occupancy time, so that the sending terminal device can still transmit the first transport block within the first channel occupancy time. Alternatively, the network device does not change the transmission resource that is of the first transport block within the first channel occupancy time and that is previously scheduled for the sending terminal device, so that the sending terminal device can still transmit the first transport block by using the transmission resource of the first transport block within the first channel occupancy time.

Optionally, when the sending terminal device works in a mode 1 scenario, the sending terminal device may determine not to send, to the network device, HARQ feedback corresponding to the non-last transmission of the first transport block within the first channel occupancy time. Alternatively, the sending terminal device may determine not to send, to the network device, HARQ feedback corresponding to each transmission of the first transport block within the first channel occupancy time. Optionally, the HARQ feedback may be an ACK or a NACK.

In a current solution, if a particular transmission of the first transport block succeeds, the sending terminal device sends ACK feedback to the network device. The network device may consider, based on the ACK feedback, that the first transport block is successfully transmitted, and does not schedule, for the sending terminal device, a subsequent retransmission resource of the first transport block within the first channel occupancy time. Based on this solution, if not receiving the HARQ feedback corresponding to the non-last transmission or each transmission of the first transport block within the first channel occupancy time, the network device may consider that the non-last transmission or each transmission of the first transport block fails within the first channel occupancy time, so that the network device continues to schedule, for the sending terminal device, a transmission resource of the first transport block within the first channel occupancy time, so that the sending terminal device transmits the first transport block within the first channel occupancy time. Alternatively, if not receiving the HARQ feedback, the network device does not change the transmission resource that is of the first transport block within the first channel occupancy time and that is previously scheduled for the sending terminal device, and the sending terminal device can still transmit the first transport block by using the transmission resource of the first transport block within the first channel occupancy time.

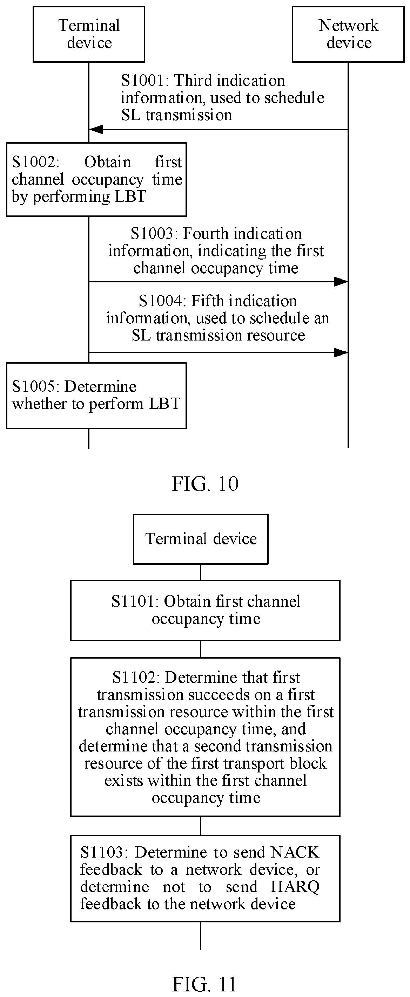

FIG. 10 shows another communication method according to an embodiment of this application. The communication method shown in FIG. 10 may be applied to an SL mode 1 scenario. In FIG. 10, an example in which a terminal device and a network device are used as execution bodies of the interaction diagram is used for illustrating the method. However, the execution body of the interaction diagram is not limited in this application. For example, the terminal device in FIG. 10 may alternatively be a chip, a chip system, or a processor that supports the terminal device in implementing the method, or may be a logical module or software that can implement all or some functions of the terminal device. The network device in FIG. 10 may alternatively be a chip, a chip system, or a processor that supports the network device in implementing the method, or may be a logical module or software that can implement all or some functions of the network device. The communication method includes S1001 to S1005.

S1001: The network device sends third indication information to the terminal device, where the third indication information is used to schedule SL transmission. Correspondingly, the terminal device receives the third indication information.

The third indication information is used to schedule an SL resource on an unlicensed spectrum.

For example, the third indication information may be DCI.

S1002: The terminal device obtains first channel occupancy time by performing an LBT process.

The terminal device performs, based on the third indication information, LBT on the SL resource scheduled by using the third indication information. If the LBT succeeds, the terminal device may preempt the first channel occupancy time.

The first channel occupancy time is a period of continuous time. Optionally, a time unit of the first channel occupancy time may be a radio frame, a subframe, a slot, a symbol, a second, a millisecond, or the like. This is not specifically limited in this embodiment of this application. For example, the first channel occupancy time may be a plurality of consecutive slots.

S1003: The terminal device sends fourth indication information to the network device, where the fourth indication information indicates the first channel occupancy time. Correspondingly, the network device receives the fourth indication information, and determines, based on the fourth indication information, that the terminal device preempts the first channel occupancy time.

For how the terminal device indicates the first channel occupancy time by using the fourth indication information, refer to the foregoing descriptions of how the second indication information indicates the first channel occupancy time in S601.

Optionally, the fourth indication information may further indicate that the terminal device expects that all transmission resources within the first channel occupancy time are scheduled. Alternatively, the terminal device may further send, to the network device, another piece of indication information indicating that the terminal device expects that all transmission resources within the first channel occupancy time are scheduled.

S1004: The network device sends fifth indication information to the terminal device, where the fifth indication information is used to schedule an SL transmission resource. Correspondingly, the terminal device receives the fifth indication information.

The fifth indication information is used to schedule an SL resource on an unlicensed spectrum. For example, the fifth indication information may be DCI.

S1005: The terminal device determines whether to perform LBT.

Specifically, if all SL transmission resources scheduled by using the fifth indication information are within the first channel occupancy time, the terminal device may not perform LBT when using the transmission resources scheduled by using the fifth indication information. If no transmission resource within the first channel occupancy time exists in the SL transmission resources scheduled by using the fifth indication information, the terminal device needs to perform LBT when using the transmission resources scheduled by using the fifth indication information. If some transmission resources in the SL transmission resources indicated by the fifth indication information are within the first channel occupancy time, the terminal device may not perform LBT when using the transmission resources that are within the first channel occupancy time and that are scheduled by using the fifth indication information, and perform LBT when using transmission resources that are not within the first channel occupancy time and that are scheduled by using the fifth indication information. Alternatively, the terminal device performs LBT when using each of the transmission resources (including a transmission resource within the first channel occupancy time and a transmission resource not within the first channel occupancy time) scheduled by using the fifth indication information.

Optionally, the network device that performs the communication method shown in FIG. 10 may not support an LBT function. Certainly, a network device that supports the LBT function may also perform the communication method shown in FIG. 10.

In a current SL-U communication solution, if a network device does not support the LBT function, a terminal device may need to perform an LBT process when using each of SL transmission resources scheduled by the network device for the terminal device. Based on this solution, the terminal device determines, by determining whether a resource scheduled by the network device is within the first channel occupancy time that is preempted, whether LBT needs to be performed when using the scheduled resource, to avoid a case in which the terminal device needs to perform LBT again when using the scheduled resource when the SL resource scheduled by the network device is within the first channel occupancy time, thereby improving channel access efficiency and communication quality of SL-U.

FIG. 11 shows another communication method according to an embodiment of this application. The communication method shown in FIG. 11 may be applied to an SL mode 1 scenario. In FIG. 11, an example in which a terminal device and a network device are used as execution bodies of the interaction diagram is used for illustrating the method. However, the execution body of the interaction diagram is not limited in this application. For example, the terminal device in FIG. 11 may alternatively be a chip, a chip system, or a processor that supports the terminal device in implementing the method, or may be a logical module or software that can implement all or some functions of the terminal device. The network device in FIG. 11 may alternatively be a chip, a chip system, or a processor that supports the network device in implementing the method, or may be a logical module or software that can implement all or some functions of the network device. The communication method includes S1101 to S1103.

S1101: The terminal device obtains first channel occupancy time, where the first channel occupancy time includes transmission resources in a plurality of consecutive time units.

For specific implementation of S1101, refer to S601. Details are not described herein.

S1102: The terminal device determines that first transmission succeeds on a first transmission resource within the first channel occupancy time, where the first transmission is used to send a first transport block to a receiving terminal device. In addition, the terminal device determines that a second transmission resource of the first transport block exists within the first channel occupancy time, where a time domain position of the second transmission resource is after a time domain position of the first transmission resource.

For specific implementation of S1101, refer to S802 and S803. Details are not described herein.

S1103: The terminal device determines to send NACK feedback to the network device, or the terminal device determines not to send HARQ feedback to the network device.

When the terminal device determines to send the NACK feedback to the network device, specifically, the terminal device sends one or more NACK feedbacks to the network device, where each of the one or more NACK feedbacks may correspond to one of non-last transmissions of the first transport block within the first channel occupancy time. Alternatively, each NACK feedback may correspond to one of all transmissions of the first transport block within the first channel occupancy time.

Optionally, the NACK feedback may be carried on a PUCCH or a PUSCH.

When the terminal device determines not to send the HARQ feedback to the network device, specifically, the terminal device may determine not to send, to the network device, the HARQ feedback corresponding to the non-last transmission of the first transport block within the first channel occupancy time. Alternatively, the sending terminal device may determine not to send, to the network device, HARQ feedback corresponding to each transmission of the first transport block within the first channel occupancy time. Optionally, the HARQ feedback may be an ACK or a NACK.

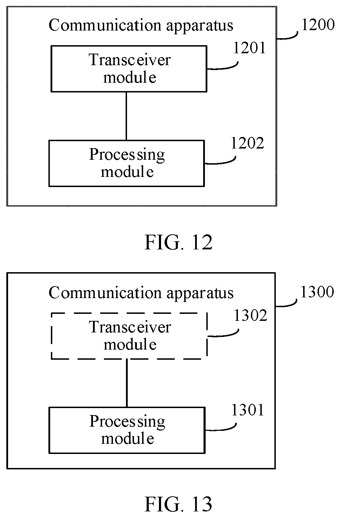

For a technical effect of the communication method shown in FIG. 12, refer to the foregoing descriptions of the technical effect of the implementation in which the sending terminal device sends the NACK feedback or does not send the HARQ feedback to the network device in the descriptions of the communication method shown in FIG. 9. Details are not described herein.

It may be understood that in the foregoing embodiments, the methods and/or steps implemented by the sending terminal device may alternatively be implemented by a component (for example, a chip or a circuit) that may be used in the sending terminal device. The methods and/or the steps implemented by the receiving terminal device may alternatively be implemented by a component (for example, a chip or a circuit) that may be used in the receiving terminal device. The methods and/or steps implemented by the network device may alternatively be implemented by a component (for example, a chip or a circuit) that may be used in the network device.

The foregoing mainly describes the solutions provided in embodiments of this application from the perspective of interaction between devices. Correspondingly, an embodiment of this application further provides a communication apparatus, and the communication apparatus is configured to implement the foregoing various methods. The communication apparatus may be the sending terminal device in the foregoing method embodiments, or an apparatus including the sending terminal device, or a component that may be used in the sending terminal device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

FIG. 12 is a diagram of a structure of a communication apparatus 1200. The communication apparatus 1200 includes a transceiver module 1201 and a processing module 1202. The transceiver module may also be referred to as a transceiver unit. The transceiver module 1201 is configured to implement a transceiver function. For example, the transceiver module may be a transceiver circuit, a transceiver machine, a transceiver, or a communication interface.

In a possible design, the processing module 1202 is configured to obtain first channel occupancy time, where the first channel occupancy time includes transmission resources in a plurality of consecutive time units. The processing module 1202 is further configured to determine that a first transmission resource is within the first channel occupancy time. The processing module 1202 is further configured to select a target logical channel from candidate logical channels, where the target logical channel is a logical channel that is hybrid automatic repeat request HARQ disabled, and selection of the target logical channel is irrelevant to a HARQ attribute of a candidate logical channel with a highest priority in the candidate logical channels. The processing module 1202 is further configured to generate a first transport block based on the target logical channel. The transceiver module 1202 is configured to send first indication information to a receiving terminal device corresponding to the first transport block, where the first indication information indicates that the first transport block is HARQ feedback disabled, and the first indication information corresponds to transmission of the first transport block on the first transmission resource.

In a possible design, the processing module 1202 is configured to obtain first channel occupancy time, where the first channel occupancy time includes transmission resources in a plurality of consecutive time units. The processing module 1202 is further configured to: when a HARQ feedback attribute used during packet assembly of a first transport block is HARQ feedback enabled, send, through the transceiver module 1201, one or more pieces of first indication information to a receiving terminal device corresponding to the first transport block, where each of the one or more pieces of first indication information corresponds to one transmission of the first transport block within the first channel occupancy time, and the first indication information indicates that the first transport block is HARQ feedback disabled.

In a possible design, the processing module 1202 is configured to obtain first channel occupancy time, where the first channel occupancy time includes transmission resources in a plurality of consecutive time units. The processing module 1202 is further configured to determine that first transmission succeeds on a first transmission resource within the first channel occupancy time, where the first transmission is used to send a first transport block to a receiving terminal device. The processing module 1202 is further configured to determine that a second transmission resource of the first transport block exists within the first channel occupancy time, where a time domain position of the second transmission resource is after a time domain position of the first transmission resource. The transceiver module 1201 is configured to perform second transmission by using the second transmission resource.

In this embodiment, the communication apparatus 1200 is presented in a form of functional modules obtained through division in an integrated manner. The module herein may be an ASIC, a circuit, a processor that executes one or more software or firmware programs, a memory, an integrated logic circuit, and/or another component that can provide the foregoing functions.

In a simple embodiment, a person skilled in the art may figure out that the communication apparatus 1300 may be in a form of the communication apparatus 400 shown in FIG. 5.

For example, the processor 401 in the communication apparatus shown in FIG. 5 may invoke the computer-executable instructions stored in the memory 403, to enable the communication apparatus 400 to perform the communication method in the foregoing method embodiments. Specifically, functions/implementation processes of the transceiver module 1201 and the processing module 1202 in FIG. 12 may be implemented by the processor 401 in the communication apparatus 400 shown in FIG. 5 by invoking the computer-executable instructions stored in the memory 403. Alternatively, a function/an implementation process of the processing module 1202 in FIG. 12 may be implemented by the processor 401 in the communication apparatus 400 shown in FIG. 5 by invoking the computer-executable instructions stored in the memory 403; and a function/an implementation process of the transceiver module 1201 in FIG. 12 may be implemented by using the communication interface 404 in the communication apparatus 400 shown in FIG. 5.

The communication apparatus 1200 provided in this embodiment may perform the foregoing communication method. Therefore, for technical effects that can be achieved by the communication apparatus, refer to the foregoing method embodiment. Details are not described herein.

FIG. 13 is a diagram of a structure of another communication apparatus 1300. The communication apparatus 1300 includes a processing module 1301.

In a possible design, the processing module 1301 is configured to obtain first channel occupancy time, where the first channel occupancy time includes transmission resources in a plurality of consecutive time units. The processing module 1301 is further configured to determine that the first transport block needs to be transmitted a plurality of times within the first channel transmission time. The processing module 1301 is further configured to determine, based on the last transmission of the first transport block within the first channel occupancy time, whether a plurality of transmissions of the first transport block succeed.

Optionally, the communication apparatus 1300 may further include a transceiver module 1302. The transceiver module may also be referred to as a transceiver unit. The transceiver module 1302 is configured to implement a transceiver function. For example, the transceiver module may be a transceiver circuit, a transceiver machine, a transceiver, or a communication interface.

In this embodiment, the communication apparatus 1300 is presented in a form of functional modules obtained through division in an integrated manner. The module herein may be an ASIC, a circuit, a processor that executes one or more software or firmware programs, a memory, an integrated logic circuit, and/or another component that can provide the foregoing functions.

In a simple embodiment, a person skilled in the art may figure out that the communication apparatus 1300 may be in a form of the communication apparatus 400 shown in FIG. 5.

For example, the processor 401 in the communication apparatus shown in FIG. 5 may invoke the computer-executable instructions stored in the memory 403, to enable the communication apparatus 400 to perform the communication method in the foregoing method embodiments. Specifically, a function/an implementation process of the processing module 1301 in FIG. 13 may be implemented by the processor 401 in the communication apparatus 400 shown in FIG. 5 by invoking the computer-executable instructions stored in the memory 403. Alternatively, functions/implementation processes of the transceiver module 1302 and the processing module 1301 in FIG. 13 may be implemented by the processor 401 in the communication apparatus 400 shown in FIG. 5 by invoking the computer-executable instructions stored in the memory 403. Alternatively, a function/an implementation process of the processing module 1301 in FIG. 13 may be implemented by the processor 401 in the communication apparatus 400 shown in FIG. 5 by invoking the computer-executable instructions stored in the memory 403; and a function/an implementation process of the transceiver module 1302 in FIG. 13 may be implemented by using the communication interface 404 in the communication apparatus 400 shown in FIG. 5.

The communication apparatus 1300 provided in this embodiment may perform the foregoing communication method. Therefore, for technical effects that can be achieved by the communication apparatus, refer to the foregoing method embodiment. Details are not described herein.

It should be noted that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (System on Chip) or an ASIC, or may be an independent semiconductor chip. In addition to a core that is configured to execute software instructions to perform operation or processing, the processor may further include a necessary hardware accelerator, such as a field programmable gate array (field programmable gate array, FPGA), a programmable logic device (programmable logic device, PLD), or a logic circuit that implements special logic operation.

When the foregoing modules or units are implemented through hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a dedicated digital circuit, a hardware accelerator, or a non-integrated discrete component, and the hardware may run necessary software or does not depend on software to perform the foregoing method procedures.

Optionally, an embodiment of this application further provides a chip system, including: at least one processor and an interface. The at least one processor is coupled to a memory by using an interface. When the at least one processor executes a computer program or instructions in the memory, the method in any one of the foregoing method embodiments is enabled to be performed. In a possible implementation, the communication apparatus further includes the memory. Optionally, the chip system may include a chip, or may include a chip and another discrete component. This is not specifically limited in this embodiment of this application.

All or some of the foregoing embodiments may be implemented by using software, hardware, firmware, or any combination thereof. When a software program is used to implement embodiments, embodiments may be implemented completely or partially in a form of a computer program product.

This application provides a computer program product, including one or more computer instructions. When the computer instructions are run on a communication apparatus, any method in embodiments of this application is enabled to be performed.

When the computer program instructions are loaded and executed on a computer, the procedure or functions according to embodiments of this application are all or partially generated. The computer may be a general-purpose computer, a dedicated computer, a computer network, or other programmable apparatuses.

The computer instructions may be stored in a computer-readable storage medium. An embodiment of this application provides a computer-readable storage medium. The computer-readable storage medium stores instructions. When the instructions are run on a communication apparatus, any method in embodiments of this application is enabled to be performed.

The computer instructions may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid state drive (solid state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example description of this application defined by the accompanying claims, and are considered as any of or all modifications, variations, combinations or equivalents that cover the scope of this application. If these modifications and variations of this application fall within the scope of the claims of this application and equivalent technologies thereof, this application is also intended to cover these modifications and variations.

## Claims

1. A communication method, wherein the method comprises:
obtaining first channel occupancy time, wherein the first channel occupancy time comprises transmission resources in a plurality of consecutive time units;
determining that first transmission succeeds on a first transmission resource within the first channel occupancy time, wherein the first transmission is used to send a first transport block to a receiving terminal device;
determining that a second transmission resource of the first transport block exists within the first channel occupancy time, wherein a time domain position of the second transmission resource is after a time domain position of the first transmission resource; and
performing second transmission by using the second transmission resource.

2. The method according to claim 1, wherein the second transmission comprises:
transmitting the first transport block;
transmitting padding information; or
transmitting a second transport block.

3. The method according to claim 2, wherein the second transmission is transmitting the second transport block; and the method further comprises:
determining, based on priority information of the second transport block and priority information of the first channel occupancy time, to transmit the second transport block by using the second transmission resource; and
determining, based on the time domain position of the second transmission resource and active time of a receiving terminal device of the second transport block, to transmit the second transport block by using the second transmission resource.

4. The method according to any one of claims 1 to 3, wherein the obtaining first channel occupancy time comprises:
receiving second indication information from a network device or another terminal device, wherein the second indication information indicates the first channel occupancy time; or
obtaining the first channel occupancy time through a listen before talk LBT process.

5. A communication method, wherein the method comprises:
obtaining first channel occupancy time, wherein the first channel occupancy time comprises transmission resources in a plurality of consecutive time units;
determining that a first transport block needs to be transmitted a plurality of times within the first channel occupancy time; and
determining, based on the last transmission of the first transport block within the first channel occupancy time, whether a plurality of transmissions of the first transport block succeed.

6. The method according to claim 5, wherein the method further comprises:
receiving a first feedback resource, wherein the first feedback resource is a feedback resource corresponding to the last transmission of the first transport block within the first channel occupancy time; and
the determining, based on the last transmission of the first transport block within the first channel occupancy time, whether a plurality of transmissions of the first transport block succeed comprises:
determining, based on the first feedback resource, whether the plurality of transmissions of the first transport block succeed.

7. The method according to claim 6, wherein the receiving a first feedback resource comprises:
receiving second feedback resources, wherein the second feedback resources are feedback resources respectively corresponding to the plurality of transmissions of the first transport block within the first channel occupancy time, and the second feedback resources comprise the first feedback resource; or
receiving only the first feedback resource.

8. The method according to claim 5, wherein the method further comprises:
receiving second feedback resources, wherein the second feedback resources are feedback resources respectively corresponding to the plurality of transmissions of the first transport block within the first channel occupancy time, and the second feedback resources comprise a feedback resource corresponding to the last transmission; and
the determining, based on the last transmission of the first transport block transmitted within the first channel occupancy time, whether the first transport block is successfully transmitted comprises:
determining, based on the second feedback resources, whether the plurality of transmissions of the first transport block succeed.

9. The method according to any one of claims 5 to 8, wherein the method further comprises:
sending one or more negative acknowledgment NACK feedbacks to a network device, wherein each of the one or more NACK feedbacks corresponds to one of non-last transmissions of the first transport block within the first channel occupancy time; or
determining not to send, to the network device, HARQ feedback corresponding to the non-last transmission of the first transport block within the first channel occupancy time.

10. The method according to any one of claims 5 to 9, wherein the obtaining first channel occupancy time comprises:
receiving second indication information from the network device or another terminal device, wherein the second indication information indicates the first channel occupancy time; and
obtaining the first channel occupancy time through a listen before talk LBT process.

11. A communication apparatus, wherein the communication apparatus comprises a processing module and a transceiver module, wherein
the processing module is configured to obtain first channel occupancy time, wherein the first channel occupancy time comprises transmission resources in a plurality of consecutive time units;
the processing module is further configured to determine that first transmission succeeds on a first transmission resource within the first channel occupancy time, wherein the first transmission is used to send a first transport block to a receiving terminal device;
the processing module is further configured to determine that a second transmission resource of the first transport block exists within the first channel occupancy time, wherein a time domain position of the second transmission resource is after a time domain position of the first transmission resource; and
the transceiver module is configured to perform second transmission by using the second transmission resource.

12. The communication apparatus according to claim 11, wherein the second transmission comprises transmitting the first transport block; transmitting padding information; or transmitting a second transport block.

13. The communication apparatus according to claim 12, wherein the second transmission is transmitting the second transport block; and
the processing module is further configured to determine, based on priority information of the second transport block and priority information of the first channel occupancy time, to transmit the second transport block by using the second transmission resource; or
the processing module is further configured to determine, based on the time domain position of the second transmission resource and active time of a receiving terminal device of the second transport block, to transmit the second transport block by using the second transmission resource.

14. The communication apparatus according to any one of claims 11 to 13, wherein
the processing module is configured to obtain the first channel occupancy time, comprising: receiving second indication information from a network device or another terminal device through the transceiver module, wherein the second indication information indicates the first channel occupancy time; or
the processing module is configured to obtain the first channel occupancy time through a listen before talk LBT process.

15. A communication apparatus, wherein the communication apparatus comprises a processing module, wherein
the processing module is configured to obtain first channel occupancy time, wherein the first channel occupancy time comprises transmission resources in a plurality of consecutive time units;
the processing module is further configured to determine that a first transport block needs to be transmitted a plurality of times within the first channel occupancy time; and
the processing module is further configured to determine, based on the last transmission of the first transport block within the first channel occupancy time, whether a plurality of transmissions of the first transport block succeed.

16. The communication apparatus according to claim 15, wherein the communication apparatus further comprises a transceiver module, wherein
the transceiver module is configured to receive a first feedback resource, wherein the first feedback resource is a feedback resource corresponding to the last transmission of the first transport block within the first channel occupancy time; and
the processing module is configured to determine, based on the last transmission of the first transport block within the first channel occupancy time, whether the plurality of transmissions of the first transport block succeed, comprising: determining, based on the first feedback resource, whether the plurality of transmissions of the first transport block succeed.

17. The communication apparatus according to claim 16, wherein
the transceiver module is configured to receive the first feedback resource, comprising: receiving second feedback resources, wherein the second feedback resources are feedback resources respectively corresponding to the plurality of transmissions of the first transport block within the first channel occupancy time, and the second feedback resources comprise the first feedback resource; or
the transceiver module is configured to receive the first feedback resource, comprising: receiving only the first feedback resource.

18. The communication apparatus according to 15, wherein the communication apparatus further comprises a transceiver module, wherein
the transceiver module is configured to receive second feedback resources, wherein the second feedback resources are feedback resources respectively corresponding to the plurality of transmissions of the first transport block within the first channel occupancy time, and the second feedback resources comprise a feedback resource corresponding to the last transmission; and
the processing module is configured to determine, based on the last transmission of the first transport block transmitted within the first channel occupancy time, whether the first transport block is successfully transmitted, comprising: determining, based on the second feedback resources, whether the plurality of transmissions of the first transport block succeed.

19. The communication apparatus according to any one of claims 15 to 18, wherein the communication apparatus further comprises the transceiver module, wherein
the transceiver module is configured to send one or more negative acknowledgment NACK feedbacks to a network device, wherein each of the one or more NACK feedbacks corresponds to one of non-last transmissions of the first transport block within the first channel occupancy time; or
the processing module is further configured to determine not to send, to the network device, HARQ feedback corresponding to the non-last transmission of the first transport block within the first channel occupancy time.

20. The communication apparatus according to any one of claims 15 to 19, wherein the communication apparatus further comprises the transceiver module, wherein
the processing module is configured to obtain the first channel occupancy time, comprising: receiving second indication information from the network device or another terminal device through the transceiver module, wherein the second indication information indicates the first channel occupancy time; or
the processing module is configured to obtain the first channel occupancy time through a listen before talk LBT process.

21. A communication apparatus, wherein the communication apparatus comprises a processor, the processor is configured to execute instructions stored in a memory, and when the instructions are run by the processor, the communication apparatus is enabled to perform the method according to any one of claims 1 to 10.

22. A computer-readable storage medium, storing a computer program, and when the computer program is executed by a computer, the method according to any one of claims 1 to 10 is enabled to be performed.

23. A computer program product, wherein when the computer program product is executed by a computer, the method according to any one of claims 1 to 10 is enabled to be performed.

24. A chip, wherein the chip comprises a processor, and the processor is configured to run a computer program, to enable an apparatus comprising the chip to perform the method according to any one of claims 1 to 10.

25. A communication system, wherein the communication system comprises a sending terminal device and a receiving terminal device, and the sending terminal device is configured to perform the method according to any one of claims 1 to 10.
